# EUROPÄISCHE PATENTANMELDUNG

(11) **EP 1 022 295 A2**
(43) Veröffentlichungstag der Anmeldung: **26.07.2000**
(21) Anmeldenummer: 00101158.4
(22) Anmeldetag: 21.01.2000
(51) Int. Cl.: C08F 291/00, C08F 220/10, C08F 290/14, C08F 2/44, A47K 3/00, B32B 27/30

(54) **Hinterfütterter Sanitärartikel und Verfahren zu dessen Herstellung**

(30) Priorität: 23.01.1999 DE 19902683
(71) Anmelder: Röhm Gesellschaft mit beschränkter Haftung, 64293 Darmstadt (DE)
(72) Erfinder: Schröder, Axel, Dr., 63456 Hanau (DE); Debes, Ralf, 63829 Krombach-Oberschur (DE)

(57) **Zusammenfassung**

Hinterfütterte Sanitärartikel, wie Badewannen, Duschwannen, Waschbecken und dergleichen weisen ein Acrylglasformteil auf, das an seiner Rückseite mit glasfaser- und asbestfreiem Polymermaterial verstärkt ist, welches fest mit dem Acrylglasformteil verbunden ist, wobei die Verstärkung durch Aushärtung eines auf die Rückseite des Acrylglasformteils aufgebrachten polymerisierbaren, kalthärtenden, reaktiven (Meth)acrylat-Systems erhältlich ist, welches neben anderen Bestandteilen als polymerisierbare Monomere A) enthält:

| | | | |
|---|---|---|---|
| A) | a) | (Meth)acrylat | 30 - 100 Gew.-% |
| | | a1) Methyl(meth)acrylat | 0 - 99,8 Gew.-% |
| | | a2) C₂-C₄ (Meth)acrylat | 0 - 99,8 Gew.-% |
| | | a3) ≥ C5 (Meth)acrylat | 0 - 50 Gew.-% |
| | | a4) mehrwertige (Meth)acrylate | 0 - 50 Gew.-% |
| | | a5) Urethan(meth)acrylate | 0,2 - 50 Gew.-% |
| | b) | Comonomere | 0 - 70 Gew.-% |
| | | b1) Vinylaromaten | 0 - 35 Gew.-% |
| | | b2) Vinylester | 0 - 35 Gew.-%, |
| | wobei die Komponenten a1) bis b2) so gwählt sind, daß sie 100 Gewichtsprozent ergeben. | | |

Die weiteren Bestandteile des (Meth)acrylatsystems werden in der Beschreibung offenbart. Die erfindungsgemäßen Sanitärartikel erfüllen alle Anforderungen der DIN EN 198 sowie weiterer einschlägiger Normvorschriften und sind vollständig und einfach recyclierbar.

## Beschreibung

Die Erfindung betrifft hinterfütterte Sanitärartikel sowie ein Verfahren zur Herstellung solcher Sanitärartikel.

Insbesondere bezieht sich die Erfindung auf Bade- oder Duschwannen und Spülbecken, die ein vorzugsweise tiefgezogenes Acrylglasformteil aufweisen, das an seiner Rückseite mit glasfaser- und asbestfreiem, vorzugsweise 1,5 bis 10 mm dickem, Polymermaterial verstärkt ist, welches insbesondere ohne zusätzliche Haftvermittler fest mit dem Acrylglasformteil verbunden ist, wobei diese Verstärkung durch Polymerisation eines (Meth)acrylatsystems erhältlich ist.

Zum näheren Stand der Technik werden folgende Druckschriften genannt:
D1 = EP-A-0 693 503;
D2 = WO 98/45375 = PCT/EP98/01881; und
D3 = DE 197 14 399 A1.

Verstärkte Sanitärartikel, die ein tiefgezogenes Acrylglasformteil aufweisen, das an seiner Rückseite mit einer Schicht eines faserhaltigen Polymermaterials verstärkt ist, welches ohne zusätzliche Haftvermittler fest mit dem Acrylglasformteil verbunden ist, sind aus der EP-A-0 693 503 ( = D1 ) bekannt.

Diese hinterfütterten Sanitärartikel kennzeichnen sich dadurch, daß die Verstärkungsschicht 1 bis 5 mm dick ist und durch Aushärtung eines auf die Rückseite des Acrylglasformteils aufgesprühten, polymerisierbaren, kalthärtenden, reaktiven (Meth) acrylat-Systems erhältlich ist. Das (Meth)acrylat-System enthält dabei als essentielle Bestandteile neben den polymerisierbaren Bestandteilen ein Redoxsystem, Feinfüllstoffe sowie zur Verstärkung 10 - 50 Gewichtsprozent Glasfaserhäcksel.

Die D1 offenbart auch ein Verfahren zur Herstellung eines hinterfütterten Sanitärartikels,
bei dem ein reaktives Harzsystem auf die Rückseite eines Formteils aus Acrylglas aufgesprüht wird, wobei das Harzsystem im Kontakt mit dem Acrylglasformteil aushärtet und sich dabei mit dem Acrylglasformteil verbindet, wobei ein überwiegend auf (Meth)acrylaten basierendes Harzsystem verwendet wird, das zu einem Polymer mit einer Glasumwandlungstemperatur Tg > 70 °C aushärtet und bezogen auf 1 Gew.-Teil des Harzsystems bis zu 2,33 Gew.-Teile solcher Füllstoffe aufweisen kann, die unter den Bedingungen der Depolymerisation des Acrylglasformteils inert sind. Die Formulierung des Verfahrensanspruches gemäß D1 macht die Anwesenheit von Glasfaserhäcksel nicht zwingend erforderlich. In allen Beispielen jedoch wird Glasfaserhäcksel als Verstärker eingesetzt.

Ein Vorteil des bekannten hinterfütterten Sanitärartikels soll nun darin bestehen, daß seine Wiederaufarbeitung durch Depolymerisation - eine dem enstprechende, geeignete Auswahl der Feinfüllstoffe vorausgesetzt - problemlos möglich sein soll. Dies trifft zwar im Hinblick auf die der D1 entnehmbaren Feinfüllstoffe uneingeschränkt zu, die in großen Mengen zur Verstärkung benötigten Glasfaserhäcksel sind jedoch bei der Depolymerisation nicht unproblematisch, was leider durch umfangreiche Ergebnisse aus der Praxis bestätigt wird. Man kann zwar theoretisch davon ausgehen, daß die Häcksel aus gebrauchten Teilen sich auf der Oberfläche des zur Depolymerisation benötigten Metallbades sammeln und mit einem Schieber oder Rakel abgeschöpft werden können, es hat sich jedoch gezeigt, daß die Häcksel in nicht zu vernachlässigendem Maße im Metallbad verbleiben und nicht ohne weiteres abgetrennt werden können. Hinzu kommt, daß die Glasfaserhäcksel grundsätzlich bezüglich der Arbeitssicherheit ähnlich wie Asbestfasern zu beurteilen sind. Eine gesundheitliche Gefährdung des Bedienpersonals durch bei der Depolymerisation teilweise in Form von Staub anfallender Glasfaserhäcksel ist nicht ohne weiteres auszuschließen. Ein Verzicht auf derlei Faserfüllstoffe wäre demnach a priori sehr erstrebenswert.

Daneben neigen die den Verstärkungsschichten aus dem Stand der Technik zugrunde liegenden (Meth)acrylat-Systeme zumindest teilweise zu Härtungsstörungen, beispielsweise Lufteinschlüssen etc. Die zur Verstärkung eingesetzten Glasfaserhäcksel stehen ab, was meint, daß die einige Zentimeter langen Fasern nach dem Auf sprühen nicht plan auf der Rückseite des Formteils aufliegen, sonder daß es bei Ausbildung des Gewirrs innerhalb des Verstärkungsmaterials zu einem mehr oder minder starken Hervorstehen der Fasern aus der Formteilebene kommt. Somit ist ein Anrollen zum Ausgleich der Härtungsstörungen und Anpressen der Faserverstärkungen unumgänglich. Dieses händische Nachbearbeiten - also die Nachbearbeitung von Hand - ist aufwendig und verteuert das Produkt.

Glasfaserhäckselfreie Lösungen sind aus der D2 bekannt. Offenbart werden hinterfütterte Sanitärartikel, aufweisend ein Acrylglasformteil, das an seiner Rückseite mit glasfaser- und asbestfreiem, 1,5 bis 10 mm dickem Polymermaterial verstärkt ist, welches ohne zusätzliche Haftvermittler fest mit dem Acrylglasformteil verbunden ist, wobei das verstärkende Material oder Verstärkungsmaterial durch Aushärtung eines auf die Rückseite des Acrylglasformteils aufgesprühten polymerisierbaren, kalthärtenden, reaktiven (Meth)acrylat-Systems erhältlich ist, welches sich dadurch kennzeichnet, daß es als einen essentiellen Füllstoff mit inertem Gas gefüllte hohle Mikropartikel in einer Menge von 0,1 bis 50 Gewichtsprozent, bezogen auf das gesamte Gewicht des (Meth)acrylatsystems, aufweist. Der Einsatz von vorzugsweise mit Calciumcarbonat beschichteten gasgefüllten, expandierten Mikrohohlkugeln aus Kunststoff als Füllstoff im(Meth)acrylatharzsystem führt zu einer Verbesserung der mechanischen Eigenschaften der Hinterfütterungsschicht, insbesondere hinsichtlich Schlagfestigkeit, Haftzugfestigkeit und Biegefestigkeit, sowie im Hinblick auf die Prüfungen nach DIN EN 198 (Warmwasserwechseltest und Kugelfalltest).

Daneben werden in D2 auch Sanitärartikel mit zweischichtigen Hinterfütterungsschichten offenbart. Vorzugsweise wird durch eine erste Hinterfütterungsschicht, die erforderliche Schlagzähigkeit bereitgestellt, während eine zweite (äußere) Hinterfütterungsschicht dem Sanitärartikel die für die Praxis notwendige Steifigkeit verleiht. Das die erste Schicht bereitstellende (Meth)acrylatsystem hat vorzugsweise einen höheren Anteil an längerkettigen (Meth)acrylaten, die Esterreste mit fünf oder mehr Kohlenstoffatomen aufweisen, während der Anteil an solchen Monomeren im (Meth)acrylatsystem der zweiten Schicht 0 bis weniger als 10 Gewichtsprozent beträgt. Daneben können sich auch die essentiell im jeweiligen Harzsystem befindlichen (Pre)polymere unterscheiden. So kann das (Pre)polymer der ersten Verstärkungsschicht einen Comonomergehalt zwischen 30 und 80 Gew.-% aufweisen, während der Comonomergehalt im (Pre)polymer der zweiten Hinterfütterungsschicht bevorzugt zwischen 0 und < 30 Gew.-% liegt.

Obwohl die Sanitärartikel gemäß der D2 bereits sehr praxistauglich sind, ist die industrielle Produktion von zwei Hinterfütterungsschichten aufwendig. So müssen die Verarbeiter zwei Harzsysteme vorhalten und verarbeiten. Zwischen den Aufbringschritten liegt ein Trockenschritt.

Hinsichtlich der Mikrohohlkugelfülstoffe wäre anzumerken, daß diese aufgrund ihrer hohen Kompressibilität nur schwer mit herkömmlichen Spritzanlagen zu versprühen sind. Dies erfordert die Entwicklung neuer Spritzverarbeitungsanlagen.

Daneben sind die mechanischen Eigenschaften auch des unter Einsatz von Mikrohohkugeln hinterfütterten Sanitärartikels weiter zu verbessern.

Aus D3 kennt man außerdem einschichtige Lösungen, bei denen ein tiefgezogenes Acrylglasformteil, das an seiner Rückseite mit glasfaser- und asbestfreiem Polymermaterial verstärkt ist, welches ohne zusätzliche Haftvermittler fest mit dem Acrylglasformteil verbunden ist, sich dadurch auszeichnet, daß das Verstärkungsmaterial 1,5 bis 10 mm dick ist und durch Aushärtung eines auf die Rückseite des Acrylglasformteils aufgesprühten polymerisierbaren, kalthärtenden, reaktiven (Meth)acrylat-Systems erhältlich ist, welches

| | | |
|---|---|---|
| A) | (Meth)acrylat | 30 - 100 Gew.-% |
| | Methyl(meth)acrylat | 0 - 100 Gew.-% |
| | C₂-C₄ (Meth)acrylat | 0 - 100 Gew.-% |
| | ≥ C₅ (Meth)acrylat | 0 - 50 Gew.-% |
| | mehrwertige (Meth)acrylate | 0 - 50 Gew.-% |
| | Comonomere | 0 - 50 Gew.-% |
| | Vinylaromaten | 0 - 30 Gew.-% |
| | Vinylester | 0 - 30 Gew.-% |
| B) | auf 1 Gew.-Teil A) 0,05 - 5 Gew.-Teile eines in A) löslichen oder quellbaren (Pre)polymers | |
| C) | ein bis zur Polymerisation von den zu polymerisierenden Bestandteilen des Systems ganz oder teilweise getrennt zu haltendes Redoxsystem enthaltend einen Beschleuniger und einen peroxydischen Katalysator oder Initiator in einer Menge ausreichend zur Kalthärtung der Komponente A) | |
| D) | übliche Additive | |
| E) | unter den Bedingungen der Depolymerisation inerte Füllstoffe bezogen auf die Summe A) - E) mit einer Feinheit ≤ 100 µm | |
| | | 1 - 75 Gew.-% |

enthält.

Angesichts des hierin genannten und ausführlich diskutierten Standes der Technik war es eine Aufgabe der Erfindung, glasfaserhäckselfrei und asbestfrei verstärkte Sanitärartikel bereitzustellen.

Weiterhin ist die Schaffung vollständig recyclierbarer Sanitärartikel, die auf Acrylglasformteilen basieren, die Aufgabe der Erfindung gewesen.

Noch eine Aufgabe der Erfindung ist die Bereitstellung vollständig recyclierbarer hinterfütterter Acrylglasformteile, die insbesondere unter Einsatz der an sich für Acrylglas bekannten Depolymerisationstechnik mittels Metallbädern, vollständig und möglichst ohne Gefährdung des Bedienpersonals recyclierbar sind.

Eine weitere Aufgabe der Erfindung ist darin zu sehen, hinterfütterte Sanitärartikel zur Verfügung zu stellen, die bei möglichst hoher Materialersparnis den allgemeinen Anforderungen genügen, wie sie im Hinblick auf die Stabilität an Sanitärartikel gestellt werden.

Dabei war es unter anderem auch Aufgabe der Erfindung, Sanitärartikel mit ausreichender Dauerhaftigkeit der Verstärkungsschicht auch und insbesondere ohne zusätzlichen Haftvermittler bereitzustellen.

Auch soll die Bildung von Rissen in der Verstärkungsschicht möglichst zurückgedrängt werden.

Noch eine weitere Aufgabe ist in der Bereitstellung möglichst schlagfester Beschichtungen für Acrylglasformteile zu sehen.

Insbesondere ist die Angabe möglichst dünn beschichteter und möglichst hoch schlagfest beschichteter Acrylglasformteile eine der Erfindung zugrundeliegende Aufgabe.

Außerdem soll der neue Sanitärartikel möglichst einfach zu fertigen sein.

Weiters soll das Nachbearbeiten per Hand auf ein Mindestmaß reduziert werden.

Es soll ein möglichst ungefährliches Verfahren zur Herstellung hinterfütterter Acrylglasformteile angegeben werden.

Schließlich spielt auch eine möglichst hohe und einfache Automatisierbarkeit des Verfahrens zur Herstellung hinterfütterter Acrylglasformteile eine nicht unwesentliche Rolle.

Von besonderem Interesse ist auch die Schaffung eines hinterfütterten Sanitärartikels, welcher möglichst mit nur einer Hinterfütterungsschicht, hohe und/oder verbesserte Werte hinsichtlich eines, mehrerer oder aller der mechanischen Parameter wie Abreißfestigkeit, Biegefestigkeit (gemessen auf der Seite des Acrylglasformteils), Biegefestigkeit (beschichtungsseitig gemessen), E-Modul, Schlagzähigkeit (gemessen auf der Seite des Acrylglasformteils), Schlagzähigkeit (beschichtungsseitig gemessen) aufweist.

Gelöst werden diese Aufgaben sowie weitere Aufgaben, die zwar nicht im einzelnen wörtlich genannt wurden, die sich jedoch aus der einleitenden Diskussion des Standes der Technik ohne weiteres erschließen oder wie selbstverständlich ableiten lassen, durch einen hinterfütterten Sanitärartikel mit allen Merkmalen des Anspruches 1.

Vorteilhafte Ausgestaltungen des erfindungsgemäßen Sanitärartikels sind Gegenstand der auf den unabhängigen Produktanspruch rückbezogenen Ansprüche.

In verfahrensmäßiger Hinsicht geben die Merkmale des unabhängigen Verfahrensanspruchs eine Lösung des der Erfindung im Hinblick auf die Verfahrensaspekte zugrundeliegenden Problems an. Vorteilhafte Verfahrensvarianten werden in den vom unabhängigen Verfahrensanspruch abhängigen Verfahrensansprüchen unter Schutz gestellt.

Insbesondere dadurch, daß bei einem hinterfütterten Sanitärartikel, aufweisend ein Acrylglasformteil, das an seiner Rückseite mit glasfaser- und asbestfreiem, vorzugsweise 1,5 bis 10 mm dickem, Polymermaterial verstärkt ist, welches mit dem Acrylglasformteil, vorzugsweise ohne zusätzliche Haftvermittler, fest verbunden ist, wobei das verstärkende Material oder Verstärkungsmaterial durch Aushärtung eines auf die Rückseite des Acrylglasformteils aufgebrachten, vorzugsweise aufgesprühten, polymerisierbaren, kalthärtenden, reaktiven (Meth) acrylat-Systems erhältlich ist, welches

| | | | |
|---|---|---|---|
| A) | a) | (Meth)acrylat | 30 - 100 Gew.-% |
| | | a1) Methyl(meth)acrylat | 0 - 99,8 Gew.-% |
| | | a2) C₂-C₄ (Meth)acrylat | 0 - 99,8 Gew.-% |
| | | a3) ≥ C₅ (Meth)acrylat | 0 - 50 Gew.-% |
| | | a4) mehrwertige (Meth)acrylate | 0 - 50 Gew.-% |
| | | a5) Urethan (meth) acrylate | 0,2- 50 Gew.-% |
| | b) | Comonomere | 0 - 70 Gew.-% |
| | | b1) Vinylaromaten | 0 - 35 Gew.-% |
| | | b2) Vinylester | 0 - 35 Gew.-% |
| B) | | auf 1 Gew.-Teil A) 0,05 - 5 Gew.-Teile eines in A) löslichen oder quellbaren (Pre)polymers | |
| C) | | ein bis zur Polymerisation von den zu polymerisierenden Bestandteilen des Systems ganz oder teilweise getrennt zu haltendes Redoxsystem enthaltend einen Beschleuniger und einen peroxydischen Katalysator oder Initiator in einer Menge ausreichend zur Kalthärtung der Komponente A) | |
| D) | | übliche Additive | |
| E) | | Füllstoffe bezogen auf die Summe A) - E) | 0 - 75 Gew.-%, |

enthält,
gelingt es alle von den Norminstituten und den industriellen Verarbeitern bezüglich der physikalischen Eigenschaften des Sanitärartikels aufgestellten Forderungen in herausragender Weise zu erfüllen und eine große Zahl weiterer zusätzlicher Vorteile zu erlangen.

Hierzu gehören unter anderem:
⇒ Vollständige Recyclierbarkeit auf dem Weg der an sich bekannten Depolymerisation unter anderem durch Vermeidung von Polyestern (Polyesterharzfreiheit) gekoppelt mit der Vermeidung gesundheitlich bedenklicher Stäube (Glasfaserhäckselfreiheit).
⇒ Entfallen des 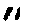 Anrollschrittes" bei der Fertigung und dadurch weitergehende Automatisierung des Herstellungsverfahrens durch Spritzroboter.
⇒ Mechanische Eigenschaften gemäß DIN EN 198 (Verformbarkeit, Schlagzähigkeit, Steifigkeit) werden in hervorragender Weise eingehalten und über die verlangten Maße hinaus erfüllt.
⇒ Mechanische Eigenschaften gemäß DIN ISO 179 (Schlagfestigkeit) werden in hervorragender Weise eingehalten und über die verlangten Maße hinaus erfüllt.
⇒ Mechanische Eigenschaften gemäß DIN ISO 178 (Biegefestigkeit) werden in hervorragender Weise eingehalten und über die verlangten Maße hinaus erfüllt.
⇒ Mechanische Eigenschaften gemäß DIN ISO 4624 (Haftzugfestigkeit) werden in hervorragender Weise eingehalten und über die verlangten Maße hinaus erfüllt.
⇒ Hohe Festigkeit der Formteile bei Beanspruchung und überragende Dauerhaftigkeit der Verbindung zwischen Hinterfütterungsschicht und Acrylglasformteil.
⇒ Es handelt sich beim Verfahren der Erfindung nicht um ein Injektionsverfahren, bei dem die gefüllte Harzmischung in einen Spalt zwischen tiefgezogenem Acrylglasformteil und ein Formwerkzeug eingefüllt wird, sondern um ein Spritzverfahren, bei dem kein Formwerkzeug benötigt wird. Ein entscheidender Vorteil des Spritzverfahrens ist hierbei die Tatsache, daß bei unterschiedlichen Wannendesigns keine entsprechend ausgeformten, kostspieligen Formwerkzeuge benötigt werden.
⇒ Das erfindungsgemäße Spritzsystem härtet bei einer Härterdosierung von 5 % nach 15 - 25 Minuten aus. Dies bedeutet eine wesentliche Verkürzung der Produktionsdauer.
⇒ Durch die vorzugsweise Lösungsmittelfreiheit des (Meth)acrylatsystems wird die Gefahr des Auftretens von Spannungsrissen minimiert. Lösungsmittelhaltige Systeme neigen insbesondere beim Temperaturwechseltest nach DIN EN 198 zu Spannungsrissen in der fertigen Verstärkungsschicht.
⇒ Gegenüber der EP-A-0 693 503 besteht nicht nur der für die vollständige Recyclierbarkeit wesentliche Vorteil der Glasfaserhäcksel- oder auch generell Glasfaserverstärkungsfreiheit, es hat sich insbesondere herausgestellt, daß bei Sanitärartikeln gemäß der EP-A-0 693 503 immer noch mechanische Defizite auftreten, welche die Tauglichkeit der Artikel aus der EP-A-0 693 503 in Frage stellen. So gelingt es durch den Einsatz von bestimmten Füllstoffen in der Verstärkungsschicht, gerade die mechanischen und physikalischen Eigenschaften eines erfindungsgemäßen Sanitärartikels stark zu verbessern.
⇒ Gegenüber den Sanitärartikeln aus der WO98/45375 können erfindungsgemäß Sanitärartikel mit einer einzigen Hinterfütterungschicht erhalten werden, die im Hinblick auf die wannenseitig gemessene Schlagzähigkeit sowie die formteilseitig gemessene Biegefestigkeit ebenso wie die beschichtungsseitig gemessene Biegefestigkeit gleichwertig oder besser sind als die in der WO98/45375 offenbarten zweischichtigen Varianten.

Ein hinterfütterter Sanitärartikel der Erfindung weist ein Acrylglasformteil und wenigstens eine verstärkende Hinterfütterungsschicht auf.

### Das Acrylglasformteil

Form und Art des Acrylglasformteils, das erfindungsgemäß hinterfüttert ist, unterliegen zunächst keiner besonderen Einschränkung. Es können Formteile aus Acrylglas hinterfüttert sein, die nach allen dem Fachmann zur Formgebung von Acrylglas bekannten Verfahren hergestellt worden sind. Hierzu gehören u. a. die Verarbeitung über den viskosen Zustand, wie Gieß-, Press- und Auftragverfahren, vorzugsweise Rotationsgießen, Schichtpressen, Formpressen, Spritzpressen, Lackieren, Tauchen, Beschichten, Rakeln, Laminieren u. dgl.; die Verarbeitung über den elastoviskosen Zustand, wie Kneten, Walzen, Kalandrieren, Extrudieren, Spritzgießen, vorzugsweise Sandwich-Spritzgießen, RIM-Verfahren; Verarbeitung über den elastoplastischen Zustand, wie Ziehen, Streckformen, Blasen, Schäumen, vorzugsweise Kaltverformungen wie Streckformen, Strecken, Ziehformen, Tiefziehen, Vakuumformen, Pultrusion, Extrusionsblasen, Spritzblasen, Spritzgießblasen, Spritzblasformen; Verarbeitung über den viskoelastischen Zustand, wie Schweißen, Sintern, Wirbelsintern, Flammspritzen, Heißstrahlspritzen u. dgl.; Verarbeitung über den festen Zustand, wie Schneiden, Stanzen, Schmieden, Sägen, Bohren, Drehen oder Fräsen. Bevorzugt ist Tiefziehen in allen Variationen, Vakuumformung, Vakuumformung ohne Formbegrenzung, Vakuumnegativverfahren, Dropform-Verfahren, Vakuumstreckformverfahren, Tiefziehsaugverfahren u. ä. Besonders bevorzugt für die Erfindung sind durch Tiefziehen erhältliche Acrylglasformteile.

Bezüglich der Art des Acrylglases besteht ebenfalls keine Limitierung. Alle marktüblichen Acrylgläser sind verwendbar.

Die Acrylglasformteile, die erfindungsgemäß mit einer Hinterfütterungsschicht versehen sind, enthalten bezüglich des Acrylglasformteils neben üblichen Additiven überwiegend Struktureinheiten, die hinsichtlich ihres chemischen Aufbaus der nachfolgenden Formel I gehorchen: 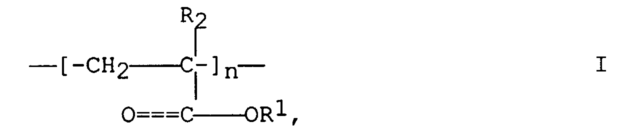 worin
R¹ C₁₋₆-Alkyl, bevorzugt C₁₋₄-Alkyl,
R² H, C₁₋₆-Alkyl, bevorzugt H oder C₁₋₄-Alkyl, ganz besonders bevorzugt H oder CH₃, und
n eine positive ganze Zahl größer 1 sind.

C₁₋₄-Alkyl umfaßt lineare und verzweigte Alkylreste mit eins bis vier Kohlenstoffatomen. Insbesondere von Interesse sind Methyl, Ethyl, n-Propyl, iso-Propyl, n-Butyl, 2-Methyl-1-propyl, sek.-Butyl, 2-Methyl-2-propyl.

C₁₋₆-Alkyl umfaßt die bei C₁₋₄-Alkyl genannten Reste und zusätzlich Reste mit 5 oder 6 Kohlenstoffatomen, wie vorzugsweise 1-Pentyl, 2-Pentyl, 3-Pentyl, 2,2-Dimethyl-1-propyl, 3-Methyl-1-butyl, 3-Methyl-2-butyl, 2-Methyl-2-butyl, 2-Methyl-1-butyl, 1-Hexyl.

Zu beispielhaften Verbindungen, welche die vorgenannte Struktureinheit aufweisen, gehören neben anderen Polymethylacrylat, Polyethylacrylat, Polymethylmethacrylat, Polypropylacrylat, Polybutylacrylat, Polypropylmethacrylat, Polybutylmethacrylat und Copolymere, die zwei oder mehrere dieser Polymersorten aufweisen. Die ersten vier Verbindungen sind im Rahmen der Erfindung bevorzugt. Ganz besonders bevorzugt ist Polymethylmethacrylat (PMMA).

Neben den chemischen Mischungen (statistische Copolymere oder auch Blockcopolymere), die durch Copolymerisation von wenigstens zwei substituierten oder unsubstituierten Acrylsäureestermonomeren entstanden sind (z. B. Methylmethacrylat-n-Butylmethacrylat-Copolymere), lassen sich im Rahmen der Erfindung auch Acrylglasformteile aus Copolymeren verwenden, die bis zu 50 Gew.-% wenigstens eines weiteren vinylisch ungesättigten Monomeren aufweisen, welches mit wenigstens einem substituierten oder unsubstituierten Acrylsäureestermonomeren copolymerisierbar ist.

Beispiele hierfür sind u. a. Methylmethacrylat-Styrol-Copolymere oder Methylmethacrylat-Butylacrylat-Styrol-Terpolymere.

Es handelt sich bei den Comonomeren um optionale Bestandteile oder Komponenten, die vorzugsweise in untergeordneter Menge in Form von sie aufweisenden Copolymeren im Acrylglas enthalten sind. Sie werden in der Regel so ausgewählt, daß sie keinen nachteiligen Effekt auf die Eigenschaften des erfindungsgemäß zu verwendenden Acrylglases haben.

Das erwähnte oder die erwähnten Comonomeren kann bzw. können u. a. dazu eingesetzt werden, die Eigenschaften des Copolymeren auf erwünschte Weise zu modifizieren, beispielsweise durch Steigerungen oder Verbesserungen der Fließeigenschaften, wenn das Copolymer im Rahmen seiner Verarbeitung zu Glas auf die Schmelztemperatur erhitzt wird, oder zur Reduzierung einer Restfarbe im Copolymer oder durch Verwendung eines polyfunktionellen Monomeren, um auf diese Art und Weise ein gewisses Maß an Vernetzung in das Copolymer einzuführen.

Zu für diesen Zweck geeigneten Monomeren gehören u. a. Vinylester, Vinylchlorid, Vinylidenchlorid, Styrol, α-Methylstyrol und die verschiedenen halogensubstituierten Styrole, Vinyl-und Isopropenylether, Diene, wie beispielsweise 1,3-Butadien und Divinylbenzol. Die Farbverminderung des Copolymeren kann beispielsweise besonders bevorzugt durch Einsatz eines elektronenreichen Monomeren, wie beispielsweise eines Vinylethers, Vinylacetat, Styrol oder α-Methylstryrol, erreicht werden.

Besonders bevorzugt unter den genannten Comonomer-Verbindungen sind aromatische Vinylmonomere, wie beispielsweise Styrol oder α-Methylstyrol.

Auch physikalische Mischungen, sogenannte Blends, sind für die Acrylglasformteile bevorzugt.

Dabei ist u. a. auch zu berücksichtigen, daß der Begriff "Acrylglas" zwar grundsätzlich eine Sammelbezeichnung für organische Kunstgläser aus Polymethacrylaten darstellt, wobei diese durch Substanz- oder Perlpolymerisation (Suspensionspolymerisation) und nachträgliches Extrudieren bzw. Spritzgießen in Form von Tafeln, Rohren, Stäben, Blöcken hergestellt werden.

Im Rahmen der Erfindung jedoch sollen per Definitionem auch die hierin oben geschilderten Abwandlungen unter dem Begriff "Acrylglas" verstanden werden.

Besonders bevorzugt sind jedoch auch für die Erfindung Kunstgläser aus Polymethacrylsäuremethylestern.

### Die Hinterfütterungsschicht(en)

Bei den erfindungsgemäßen Sanitärartikeln, z. B. Wannen und Becken, kann es dadurch, daß das Verstärkungsmaterial vorzugsweise eine relativ geringe Dicke im Bereich von 1,5 bis 10 mm, bevorzugt 1,5 - <8 mm, aufweist, gelingen, eine hohe Gewichts- und Materialersparnis zu realisieren, womit bei Einhaltung der erforderlichen Festigkeitswerte eine Reduzierung der Stückkosten einhergeht. Verstärkt wird dieser Ersparniseffekt zusätzlich durch die Beschaffenheit der Verstärkungsschicht, unter anderem auch im Hinblick auf Monomerkomponenten und Füllstoffe, und die Art der Aufbringung der die Verstärkungsschicht ergebenden Materialien. Ein zusätzlicher Ersparniseffekt ergibt sich durch die schnelle Aushärtungszeit.

Durch den Einsatz in der oder den Hinterfütterungsschichten von Urethan(meth)acrylaten (Komponente a5)), gelingt in nicht ohne weiteres vorhersehbarer Weise, eine überraschende Verbesserung von wichtigen Eigenschaften der verstärkten Sanitärartikel gemäß der Erfindung.

Insbesondere verbessern sich die mechanischen Eigenschaften des ausgehärteten Materials erheblich. Hierbei überrascht nicht nur die Tatsache, daß überhaupt Eigenschaften wie die Schlagfestigkeit oder Haftzugfestigkeit des Verbundes aus Acrylglasformteil und Hinterfütterung verbessert werden, viel überraschender ist noch die Qualität der Verbesserung. So sind Verbesserungen der Haftzugfestigkeit von 100 % und mehr zu registrieren, verglichen mit Verstärkungsschichten ohne Urethan (meth)acrylate.

Hinterfütterte Sanitärartikel mit günstigen Eigenschaften ergeben sich zum Beispiel dann, wenn der Gehalt an Komponente a5) im Bereich von 3 bis 25 Gewichtsprozent, vorzugsweise 5 bis 20 Gewichtsprozent liegt, bezogen auf die Summe der Komponenten a) und b) zu 100 Gewichtsprozent.

Obwohl auch bereits am Markt erhältliche Urethan(meth)acrylate gewisse Vorteile erzielbar machten, treten die erwünschten Effekte mit den erfindungsgemäßen neuartigen Urethan(meth)acrylaten besonders ausgeprägt hervor.

Eine äußerst zweckmäßige Variante der Erfindung sieht vor, daß das zur Bildung der verstärkenden Schicht des Sanitärartikels eingesetzte (Meth)acrylatsystem A) bis E) einen flexibilisierend wirkenden Gehalt an wenigstens einem Urethan(meth)acrylat a5) enthält, welches wenigstens drei reaktive, endständige, ethylenisch ungesättigte Funktionalitäten aufweist.

Diese neuartigen Urethan(meth)acrylate sind vorzugsweise erhältlich durch die Umsetzung von
entweder I)
   i) Hydroxyalkyl (meth) acrylsäureestern mit
   ii) Polyisocyanaten und
   iii) Polyoxyalkylenen, die mindestens drei Hydroxyfunktionalitäten aufweisen, wobei der Anteil an Polyethylenoxid kleiner als 50 Gew.-%, bezogen auf die Gesamtmenge an Polyoxyalkylen, ist,
oder II)
   i') Hydroxyalkyl (meth) acrylsäureestern mit
   ii') Mischungen aus Polyisocyanaten, von denen mindestens ein Polyisocyanat 3 oder mehr Isocyanatgruppen aufweist, und
   iii') Polyoxyalkylenen, die mindestens zwei Hydroxyfunktionalitäten aufweisen, wobei der Anteil an Polyethylenoxid kleiner als 50 Gew.-%, bezogen auf die Gesamtmenge an Polyoxyalkylen, ist.

Noch eine zweckmäßige Abwandlung der Erfindung sieht vor, daß die Urethan(meth)acrylate a5) durch die Umsetzung von Hydroxyethylmethacrylat, Hydroxyethylacrylat, Hydroxypropylmethacrylat, Hydroxypropylacrylat und/oder Mischungen von zwei oder mehreren der vorstehenden Verbindungen als Hydroxyalkyl(meth)acrylsäureester erhältlich sind.

Von Interesse sind auch Sanitärartikel, die sich dadurch kennzeichnen, daß die Urethan(meth)acrylate a5) durch Umsetzung von 2,4-Toluendiisocyanat, 2,6-Toluendiisocyanat, 4,4'-Diphenylmethandiisocyanat (MDI), 4,4'-Dicyclohexyldiisocyanat, meta- und para-Tetramethylxylendiisocyanat, 3-Isocyanatomethyl-3,5,5-trimethylcyclohexylisocyanat (Isophorondiisocyanat), Hexamethylendiisocyanat, 1,5-Naphthylendiisocyanat, Dianisidindiisocyanat, Di(2-isocyanatoethyl)-bicyclo[2.2.1]-hept-5-en-2,3-dicarboxylat, 2,2,4- und 2,4,4-Trimethylhexamethylendiisocyanat, Triphenylmethan-4,4*'*,4*''*-triisocyanat, Tris-(4-isocyanatophenyl)-thiophosphat und Mischungen davon als Polyisocyanat erhältlich sind.

Weiterhin zweckmäßig sind Sanitärartikel erhältlich unter Verwendung von Urethan(meth)acrylaten a5), die durch die Umsetzung von Polyoxypropylen und/oder Polytetramethylenoxiden, die jeweils mindestens drei reaktive, endständige Hydroxyfunktionalitäten aufweisen, als Polyoxyalkylen erhältlich sind.

Von ganz besonderem Interesse sind auch solche Sanitärartikel, die aus dem Einsatz von (Meth)acrylatsystemen resultieren, welche Urethan(meth)acrylate als Komponente a5) aufweisen, die drei oder vier reaktive endständige ethylenisch ungesättigte Funktionalitäten aufweisen.

Vorteilhafte Ausführungsformen des erfindungsgemäßen Sanitärartikels ergeben sich auch dadurch, daß die Urethan(meth)acrylate durch Umsetzung von Polyoxyalkylenen erhältlich sind, welche ein Gewichtsmittel des Molekulargewichts im Bereich von 2 000 bis 20 000 aufweisen.

In Kombination mit dem erfindungsgemäßen Einsatz von Urethan(meth)acrylaten in der Verstärkungsschicht können bei den erfindungsgemäßen hinterfütterten Sanitärartikeln auch weitere Merkmale zur Realisierung von Vorteilen verwirklicht sein.

In einer ganz besonderen Ausführungsform kennzeichnet sich ein erfindungsgemäßer Sanitärartikel dadurch, daß das Verstärkungsmaterial aus einer ersten und einer zweiten Schicht besteht, wobei die erste Schicht durch Aushärtung eines auf die Rückseite des Acrylglasformteils aufgesprühten polymerisierbaren, kalthärtenden, reaktiven, ersten (Meth)acrylat-Systems erhältlich ist, ebenso wie auch die zweite Schicht durch Aushärtung eines zweiten (Meth)acrylat-Systems erhältlich ist, die Schichten sich jedoch eindeutig voneinander unterscheiden.

Insbesonders sind solche zweischichtigen Verstärkungen von Vorteil, bei denen sich die erste und die zweite Schicht dadurch unterscheiden, daß die zur Bildung der entsprechenden Schichten eingesetzten (Meth)acrylatsysteme voneinander verschieden sind. Insbesondere betreffen diese Unterschiede die Art und/oder den Gehalt an Komponenten a3) und/oder B). Ferner soll auch darauf hingewiesen werden, daß auch mehr als zwei Hinterfütterungsschichten möglich sind, ebenso wie der Einsatz von Urethan(meth)acrylaten unter Umständen auf eine einzige Hinterfütterungsschicht von gegebenenfalls zwei oder mehr vorhandenen Schichten beschränkt sein kann.

Obwohl mit einer erfindungsgemäßen einschichtigen Verstärkung bereits alle Erfordernisse der DIN EN 198 erfüllt werden können, hat die zweischichtige Verstärkung im Rahmen der Erfindung den Vorteil, daß bestimmte mechanische Eigenschaften (vor allem die Schlagzähigkeit) des fertigen Sanitärartikels weiter verbessert werden können.

Die Hinterfütterungs- oder Verstärkungsschicht ebenso wie die in zweckmäßiger Abwandlung der Erfindung das Acrylglasformteil verstärkenden wenigstens zwei Hinterfütterungsschichten sind durch Aushärtung eines oder durch Aushärtung von zwei oder mehreren polymerisierbaren, kalthärtenden, reaktiven (Meth)acrylat-Systemen erhältlich, die sich jeweils aus den Komponenten A) bis D) zusammensetzen, die zusammen das Bindemittel darstellen, sowie den Füllstoffen E).

Dies bedeutet in einer ersten Variante, daß ein (Meth)acrylatsystem die einzige rückseitige Verstärkungsschicht eines Sanitärartikels aus geformtem Arcylglas ausbildet.

Dies bedeutet auch, daß in einer zweiten Variante ein erstes (Meth)acrylatsystem eine erste rückseitige Schicht auf dem Acrylglasformteil ausbildet, während ein zweites (Meth)acrylatsystem eine zweite rückseitige Schicht auf dem Acrylglasformteil und der ersten rückseitigen Schicht ausbildet.

Obwohl im letztgenannten Fall beide, also sowohl das erste als auch das zweite (Meth)acrylatsystem aus den Komponenten A) bis E) bestehen können, sind die einzelnen Bestandteile im Hinblick auf Art und/oder Menge so aus den vorgegebenen Definitionen ausgewählt, daß erstes und zweites (Meth)acrylatsystem eindeutig voneinander verschieden sind.

### Das Bindemittel

Das Bindemittel eines (Meth)acrylatsystems setzt sich wiederum zusammen aus polymerisierbaren Monomeren A), ggf. in diesem löslichen oder quellbaren (Pre)polymeren B), einem Redoxsystem C) sowie gegebenenfalls weiteren üblichen Additiven D).

### Die Komponente A)

Die Komponente A) ist essentieller Bestandteil des Bindemittels.

Als Monomer A) wird gemäß der Erfindung ein Gemisch von Monomeren eingesetzt. Insbesondere ist die Komponente a5) essentieller Bestandteil. Daneben ist auch a1) in den weitaus meisten Fällen in der Monomerkomponente des Bindemittels vertreten. Die Zusammensetzung der Komponente A) ist:

| | |
|---|---|
| (Meth) acrylat | 30 - 100 Gew.-% |
| Methyl(meth)acrylat | 0 - 99,8 Gew.-% |
| C₂-C₄ (Meth)acrylat | 0 - 99,8 Gew.-% |
| ≥ C₅ (Meth)acrylat | 0 - 50 Gew.-% |
| mehrwertige (Meth)acrylate | 0 - 50 Gew.-% |
| Urethan(meth)acrylate | 0,2- 50 Gew.-% |
| Comonomere | 0 - 70 Gew.-% |
| Vinylaromaten | 0 - 35 Gew.-% |
| Vinylester | 0 - 35 Gew.-%, |

wobei die Monomeren so ausgewählt sind, daß sie zusammen 100 Gew.-% ergeben.

Ein in Klammern gesetzter Bestandteil steht für dessen optionale Verwendbarkeit, d. h. (Meth)acrylat steht für Acrylat und/oder Methacrylat.

Die Monomerkomponente A) enthält zumindest 30 Gew.-% (Meth)acrylat, wobei einwertige (Meth)acrylate mit einem C₁-C₄-Esterrest bevorzugt sind. Längerkettige Ester, d. h. solche mit einem C₅- oder längerkettigen Esterrest sind auf 50 Gew.-% in der Komponente A) beschränkt.

Die langkettigen (Meth)acrylate machen in der angegebenen Menge das System schlagzäher. Damit machen diese Ester die Hinterfütterung der Acrylglasformteile zwar flexibler, aber auch weicher, wodurch die Gebrauchseigenschaften bei Mengen über 50 Gew.-% eingeschränkt würden.

Vorzugsweise sind in der Komponente A) auch mehrwertige (Meth)acrylate enthalten. Vorzugsweise sind ≥ C₅ (Meth)acrylate im ersten Fall im (Meth)acrylatsystem in der Komponente A) in einer Menge von 10 - 30 Gew.-%, besonders zweckmäßig in einer Menge von 15 - 25 Gew.-%, enthalten.

Neben den (Meth)acrylaten kann die Komponente A) auch andere Comonomere enthalten, wobei deren Anteil auf 70 Gew.-% beschränkt ist. Unter diesen Comonomeren können Vinylaromaten und/oder Vinylester zu jeweils bis zu 35 Gew.-% in der Komponente A) enthalten sein. Höhere Anteile an Vinylaromaten lassen sich schwer einpolymerisieren und können zu einer Entmischung des Systems führen. Höhere Anteile an Vinylester können weiterhin bei tiefen Temperaturen nur ungenügend durchhärten und neigen zu einem größeren Schrumpfverhalten.

Vorzugsweise ist die Komponente A) zu 80 - 100 Gew.-% und besonders bevorzugt zu 90 - 100 Gew.-% aus (Meth)acrylaten aufgebaut, da sich mit diesen Monomeren günstige Verarbeitungs- und Gebrauchseigenschaften für die Hinterfütterung erreichen lassen. Der Anteil an C₂-C₄-Estern in (Meth)acrylaten ist vorzugsweise auf 50 Gew.-% in der Komponente A) beschränkt, bevorzugt sind diese Ester zu max. 30 Gew.-% und besonders vorteilhaft zu max. 20 Gew.-% in der Komponente A) enthalten. Hierdurch lassen sich besonders flexible Hinterfütterungsschichten aufbauen.

Geeignete monofunktionelle (Meth)acrylate sind insbesondere Methylmethacrylat, Butylmethacrylat, Butylacrylat, 2-Ethylhexylacrylat, Ethyltriglykolmethacrylat, Hydroxypropylmethacrylat.

Als Comonomere eignen sich insbesondere Vinyltoluol, Styrol, Vinylester.

Vorzugsweise ist Styrol auf max. 20 Gew.-% in A) beschränkt, da ein höherer Gehalt zu Störungen bei der Kalthärtung führt und mit starken Geruchsbelästigungen zu rechnen ist.

Besonders vorteilhaft sind polyfunktionelle (Meth)acrylate in der Komponente A) enthalten, wobei deren Gehalt üblicherweise im Bereich 1 bis 50 Gew.-% und meist bei 1 bis 10 Gew.-% in A) liegt. Die polyfunktionellen (Meth)acrylate dienen zur Polymerverknüpfung zwischen linearen Molekülen. Dadurch können Eigenschaften wie Flexibilität, Kratzfestigkeit, Glasumwandlungstemperatur, Schmelzpunkt oder Härtungsabläufe beeinflußt werden.

Zu einsetzbaren mehrfachfunktionellen (Meth) acrylaten gehören unter anderem:
(1) Difunktionelle (Meth)acrylate
   Verbindungen der allgemeinen Formel: 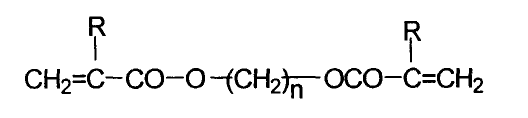 worin R Wasserstoff oder Methyl ist und n eine positive ganze Zahl zwischen 3 und 20, wie z. B. Di(meth)acrylat des Propandiols, Butandiols, Hexandiols, Octandiols, Nonandiols, Decandiols und Eicosandiols, Verbindungen der allgemeinen Formel: 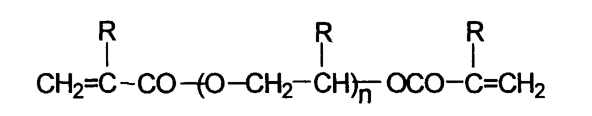 worin R Wasserstoff oder Methyl ist und n eine positive ganze Zahl zwischen 1 und 14, wie z. B. Di(meth)acrylat des Ethylenglycols, Diethylenglycols, Triethylenglycols, Tetraethylenglycols, Dodecaethylenglycols, Tetradecaethylenglycols, Propylenglycols, Dipropylglycols und Tetradecapropylenglycols; und Glycerindi (meth) acrylat, 2,2'-Bis[p-(γ-methacryloxy-β-hydroxypropoxy)-phenylpropan] oder Bis-GMA, Biphenol-A-dimethacrylat, Neopentylglycoldi(meth)acrylat, 2,2'-Di(4-methacryloxypolyethoxyphenyl)propan mit 2 bis 10 Ethoxygruppen pro Molekül und 1,2-Bis(3-methacryloxy-2-hydroxypropoxy)butan.
(2) Tri- oder mehrfachfunktionelle (Meth)acrylate
   Trimethylolpropantri(meth)acrylate und Pentaerythritoltetra(meth)acrylat.

Bevorzugte übliche polyfunktionelle (Meth)acrylate umfaßen neben anderen Triethylenglykoldimethacrylat (TEDMA), Trimethylolpropantrimethacrylat (TRIM), 1,4-Butandioldimethacrylat (1,4-BDMA), Ethylenglykoldimethacrylat (EDMA).

Essentieller Monomerbestandteil eines erfindungsgemäß einzusetzenden (Meth)acrylatsystems sind Urethan(meth)acrylate.

Diese sind beispielsweise erhältlich aus isocyanatfunktionellen Vorpolymeren, in welche mittels hydroxyfunktionellen Verbindungen, wie z. B. Hydroxyethylacrylat, Hydroxyethylmethacrylat, Alkylalkohol, Vinylalkohol usw., olefinische Doppelbindungen eingeführt werden.

Die isocyanatfunktionellen Vorpolymeren, welche bei der Durchführung der Erfindung geeignet sind häufig Addukte oder Kondensationsprodukte von Polyisocyanatverbindungen, die wenigstens zwei freie Isocyanatgruppen aufweisen, und monomeren oder polymeren Polyolen mit wenigstens zwei Hydroxygruppen, einschließlich von Mischungen solcher Polyole. Die Reaktion zwischen dem Polyisocyanat und den Polyolen wird unter Verwendung einer Überschußmenge an Polyisocyanat durchgeführt, um sicherzustellen, daß das Reaktionsprodukt wenigstens zwei freie, nichtreagierte Isocyanatgruppen aufweist.

Bei der Herstellung der gemäß der Erfindung verwendeten isocyanatfunktionellen Vorpolymeren brauchbare Polyole besitzen vorzugsweise ein Durchschnittsmolekulargewicht von etwa 300 bis etwa 3000. Geeignete Polyole umfassen Polyalkylenglykole, wie Polyethylenglykole, Polyetherpolyole, wie die Verbindungen, welche durch Additionspolymerisation von Ethylenoxid und einem Polyol, wie Trimethylolpropan, in einem Verhältnis zur Bereitstellung von nicht umgesetzten Hydroxylgruppen in dem Produkt hergestellt wurden, organische hydroxylierte Elastomere, die eine Einfriertemperatur (Glasübergangstemperatur zweiter Ordnung) unterhalb etwa 5 °C besitzen, wie Poly(butadien-styrol)-polyole und Poly(butadien)-polyole, Polyesterpolyole, wie sie durch Polymerisation von Polyolen, z. B. Diethylenglykol, Trimethylolpropan oder 1,4-Butandiol, mit Polycarbonsäuren wie Phthalsäure, Terephthalsäure, Adipinsäure, Maleinsäure oder Bernsteinsäure, in einem Verhältnis zur Bereitstellung von nicht umgesetzten Hydroxylgruppen in dem Produkt hergestellt wurden; Glyceridester von hydroxylierten Fettsäuren, wie Rizinusöl, Glycerinmonoricinoleat, geblasenes Leinöl oder geblasenes Sojaöl; sowie Polyesterpolyole, wie sie beispielsweise durch Polymerisation eines Lactons, wie ε-Caprolacton, hergestellt wurden.

Polyisocyanate, welche mit Polyolen unter Bildung von isocyanatfunktionellen Vorpolymeren, die gemäß der Erfindung verwendet werden, umgesetzt werden können, können beliebige monomere, d. h. nicht-polymere, Isocyanatverbindungen mit wenigstens zwei freien Isocyanatgruppen sein, einschließlich aliphatischen, cycloaliphatischen und aromatischen Verbindungen. Typische Vertreter von Polyisocyanaten umfassen - ohne Beschränkung hierauf: 2,4-Tolylendiisocyanat, 2,6-Tolylendiisocyanat, 4,4'-Diphenylmethandiisocyanat, m- und p-Phenylendiisocyanat, Polymethylenpoly (phenylisocyanat), Hexamethylendiisocyanat, 4,4'-Methylen- bis (cyclohexylisocyanat), Isophorondiisocyanat und andere aliphatische, cycloaliphatische und aromatische Polyisocyanate, einschließlich Mischungen solcher Polyisocyanate. Häufig werden cycloaliphatische und aromatische Polyisocyanate bevorzugt.

Zu in der erfindungsgemäßen Harzformulierung mit besonderem Erfolg einsetzbaren Urethan(meth)acrylaten gehören unter anderem eine oder mehrere der radikalisch polymerisierbaren Verbindungen der allgemeinen Formel A.I

(H₂C=CR¹-C(=O)-O-R²-O-C(=O)-NH-)ₙR³ (A.I)

worin
- R¹ =: Wasserstoff oder eine Methylgruppe,
- R² =: eine lineare oder verzweigte Alkylengruppe mit 2 bis 6 Kohlenstoffatomen oder Alkylenoxide mit 4 bis 21 Kohlenstoffatomen und
- n =: 2 oder 3 ist,
wobei R³ für n = 2 ist:

[-Q-NH-C (=O) ] ₂[{ -O-R⁴-O-C (=O) -NH-Q'-NH-C (=O) }ₘ-O-R⁴-O-]

wobei m = 0 bis 10 und
- R⁴: a) ein Polycaprolactondiol-Rest
b) ein Polytetrahydrofurfuryldiol-Rest
oder wobei R³ für n = 3 ist:

[-Q-NH-C(=O)-((CH₂)₅-C(=O))ₚ-]₃R⁵,

wobei R⁵ ein Triol-Rest eines 3 bis 6 Kohlenstoffatome enthaltenden, linearen oder verzweigten dreiwertigen Alkohols und p = 1 bis 10 ist und
Q und Q' unabhängig voneinander 6 bis 18 Kohlenstoffatome enthaltende aromatische, aliphatische oder cycloaliphatische Gruppen sind, die sich von Diisocyanaten oder Diisocyanatgemischen ableiten.

Die Verbindungen der Formel (A.I) sind herstellbar nach im Stand der Technik an sich bekannten Verfahren durch Umsetzung eines in der Estergruppe Hydroxylgruppen enthaltenden Acrylates (R¹ = H) oder Methacrylates (R¹ = CH₃) mit Isocyanatgruppen enthaltenden Verbindungen unter Bildung einer Urethangruppe. Die Hydroxyalkylacrylate oder -Methacrylate enthalten Alkylgruppen, die linear oder verzweigt sein können und zwischen 2 bis 6 Kohlenstoffatome enthalten. Gemäß der Erfindung können auch die Ester von Acrylsäure und Methacrylsäure mit Polyethylenglykol und/oder Polypropylenglykol eingesetzt werden. Derartige Acrylate oder Methacrylate enthalten 4 bis 21 Kohlenstoffatome in der Estergruppe, entsprechend 2 bis 10 Ethylenoxideinheiten und 1 bis 7 Propylenoxideinheiten. Die Herstellung derartiger Ester ist dem Fachmann bekannt.

Bei den Verbindungen der allgemeinen Formel (A.I) für den Fall, daß n = 2 ist, handelt es sich um Umsetzungsprodukte von Hydroxylgruppen enthaltenden Acrylaten oder Methacrylaten mit Isocyanaten, die erhältlich sind durch Reaktion von geeigneten Diolen mit Diisocyanaten.

Geeignete Hydroxylgruppen enthaltende (Meth) acrylate gehorchen der allgemeinen Formel A.II

H₂C=CR¹-C(=O)-O-R²-OH (A.II),

worin
- R¹ =: Wasserstoff oder Methyl und
- R² =: Ethylen.

Geeignete Acrylate oder Methacrylate sind solche, für die R² eine Ethylen-, Propylen-, Isopropylen-, n-Butylen-, Isobutylen-Gruppe oder 4 bis 7 Ethylenoxid- oder Propylenoxideinheiten enthalten.

Bevorzugt für die Umsetzung der Isocyanate mit den Hydroxylgruppen tragenden Acrylaten oder Methacrylaten werden jedoch Hydroxyethylacrylat, Hydroxyethylmethacrylat, 2-Hydroxypropylacrylat, 2-Hydroxypropylmethacrylat, 3-Hydroxypropylacrylat, 3-Hydroxypropylmethacrylat, 6-Hydroxyhexylacrylat, 6-Hydroxyhexylmethacrylat, Polyethylenglykolacrylat, Polyethylenglykolmethacrylat, Polypropylenglykolacrylat und Polypropylenglykolmethacrylat.

Bei den geradkettigen oder verzweigten Alkylgruppen mit 1 bis 8 Kohlenstoffatomen für R³ handelt es sich insbesondere um Methyl-, Ethyl-, Propyl-, Isopropyl-, n-Butyl-, Isobutyl-, tert.-Butyl-, Pentyl-, Isopentyl-, Neopentyl- oder die Hexylgruppe.

Bei den Cycloalkylgruppen mit 3 bis 12 Kohlenstoffatomen handelt es sich vorzugsweise um solche, die ausgewählt sind aus der Cyclopropyl-, Cyclobutyl-, Cyclopentyl-, Cyclohexyl- und Cycloheptylgruppe.

Als aromatische, 6 bis 18 Kohlenstoffatome enthaltende Gruppen sind insbesondere die Phenyl-, 2-Toluenyl-, 4-Toluenyl- und die Xylenylgruppe zu erwähnen, die durch Reaktion der Hydroxylgruppen enthaltenden (Meth)acrylate mit den entsprechenden Isocyanaten eingeführt wird.

Bei den Diolen handelt es sich um a) Polycaprolactondiole, b) Polytetrahydrofurfuryldiole und c) spezielle Polyesterdiole. Das Molverhältnis bei der Reaktion von den Diolen mit den Diisocyanaten kann im Verhältnis von 1 : 1 bis zu 1 : 1,1 variieren.
a) Polycaprolactondiole sind nach an sich bekannten Verfahren erhältlich durch Ringöffnungspolymerisation von Caprolacton mit geeigneten Diolen, wobei das Verhältnis von Caprolacton zum Diol 1 bis 20 beträgt, also 2 bis 40 Mol Caprolacton pro Mol Diol eingesetzt wird. Das Molekulargewicht der Polycaprolactondiole beträgt zwischen 200 und 4000.
   Als Diole kommen insbesondere lineare oder verzweigte zweiwertige, 2 bis 6 Kohlenstoffatome enthaltende Alkohole in Frage, die ausgewählt sind aus Ethylenglykol, 1,2-Propandiol, 1,3-Propandiol, 1,2-, 1,3- oder 1,4-Butandiol, 1,5-Pentandiol, 2-Methyl-1,4-butandiol, 2,2-Dimethyl-1,3-Propandiol, 1,2- oder 1,6-Hexandiol, 1,10-Decandiol.
   Die Reaktionsprodukte aus dem Diol und dem Caprolacton werden anschließend nach dem Fachmann bekannten Verfahren mit aromatischen, aliphatischen oder cyclischen Diisocyanaten umgesetzt. Geeignete Diisocyanate, von denen sich Q und unabhängig davon auch Q' ableitet, sind ausgewählt aus 2,4-Toluendiisocyanat, 2,6-Toluendiisocyanat, 4,4'-Diphenylmethandiisocyanat (MDI), 4,4'-Dicyclohexyldiisocyanat, meta- und para-Tetramethyl-xylendiisocyanat, 3-Isocyanatomethyl-3,5,5-trimethylcyclohexylisocyanat (Isophorondiisocyanat), Hexamethylendiisocyanat, 1,5-Naphthylendiisocyanat, Dianisidindiisocyanat, Di(2-isocyanatoethyl)-bicyclo[2.2.1]-hept-5-en-2,3-dicarboxylat, 2,2,4- und 2,4,4-Trimethylenhexamethylendiisocyanat und Gemischen davon.
   Anschließend wird das Reaktionsprodukt aus dem Diol, dem Caprolacton und dem Diisocyanat nach an sich bekannten Verfahren mit dem Hydroxylgruppen enthaltenden Acrylat oder Methacrylat zum Polyurethan (meth) acrylat umgesetzt.
b) Der Aufbau der sich von Polytetrahydrofurfuryldiol ableitenden Verbindungen der Formel I für n = 2 erfolgt prinzipiell nach dem gleichen Schema wie unter a) beschrieben. Zunächst wird Polytetrahydrofurfuryldiol mit einem der oben unter a) genannten Diisocyanate zur Reaktion gebracht und das Reaktionsprodukt daraus mit den bereits erwähnten Hydroxylgruppen enthaltenden Acrylaten oder Methacrylaten der Formel B1.II zum Polyurethan (meth) acrylat umgesetzt. Hinsichtlich des Verfahrens zur Umsetzung von Diolen mit Diisocyanaten wird auf die dem Fachmann bekannte einschlägige Fachliteratur verwiesen. Das Molekulargewicht der Produkte beträgt zwischen 200 und 4500.
c) Besonders gute Ergebnisse lassen sich im Rahmen der Erfindung mit Urethan(meth)acrylaten erhalten, die sich von speziellen Polyesterdiolen ableiten.
   Äußerst zweckmäßig ist demnach der Einsatz von Verbindungen der allgemeinen Formel A.III

   [H₂C=CR¹-C (=O) -O-R²-O-C (=O) -NH-Q-NH-C (=O)]₂[ {-O-R^{4a}-O-C (O =)-NH-Q'-NH-C(O=) }ₘ-O-R^{4a}-O-] (A.III)

   worin
   - m =: 0 bis 10,
   - R¹ =: Wasserstoff oder Methylgruppe,
   - R² =: einen linearen oder verzweigten Alkylenrest mit 2 bis 6 Kohlenstoffatomen oder ein Alkylenoxid mit 4 bis 21 Kohlenstoffatomen ist,
   - Q und Q': unabhängig voneinander 6 bis 18 Kohlenstoffatome enthaltende aromatische, aliphatische oder cycloaliphatische Gruppen sind, die sich von dem zugrundeliegenden Diisocyanat oder Diisocyanatgemischen ableiten und
   - R^{4a}: von einem Polyesterdiol mit einem C:O-Verhältnis von > 2,6, einem C:H-Verhältnis < 10 und einem Molekulargewicht von 1000 bis 20000 abgeleitet ist.

Durch den Einsatz der Urethan(meth)acrylate der allgemeinen Formel A.III werden besonders gute Eigenschaften, insbesondere hinsichtlich der Hydrophobierung erreicht. Diese Urethan(meth)acrylate weisen eine besondere elastifizierende Wirkung auf.

R⁴ entspricht Polyesterdiol-Resten, die sich von Polyesterdiolen ableiten, die gekennzeichnet durch ein C:O-Verhältnis von > 2,6, vorzugsweise > 3,0, und ein C:H-Verhältnis von < 10. Ferner zeichnen sich diese Polyesterdiole durch ein Molekulargewicht von 1000 bis 20000, insbesondere von 1000 bis 10000, aus.

Die Herstellung dieser speziellen Polyesterdiole erfolgt durch Umsetzung von langkettigen Diolen, insbesondere Dimerdiol (hydrierte Dimerfettsäure) mit kürzerkettigen 4 bis 8 Kohlenstoffatome enthaltenden Dicarbonsäuren oder deren Anhydriden, insbesondere Bernsteinsäure oder Bernsteinsäureanhydrid. Die Polyesterdiole können auch hergestellt werden durch Umsetzung von kürzerkettigen 4 bis 8 Kohlenstoffatome enthaltenden Diolen, insbesondere 1,6-Hexandiol mit langkettigen Fettsäuren, insbesondere Dimerfettsäure-Gemisch aus dimerisierten Fettsäuren von acyclischen und cyclischen Dicarbonsäuren mit durchschnittlich 36 Kohlenstoffatomen. Es können aber auch Gemische aus langkettigen Diolen mit kürzerkettigen Diolen eingesetzt werden, wie insbesondere Gemische aus Hexandiol und Polyethylenglykol oder aus Dimerdiol und Diethylenglykol.

Allgemein als Diole besonders bevorzugt sind lineare oder verzweigte C₂-C₄₄-Alkyldiole wie Ethylenglykol, 1,2- oder 1,3-Propylenglykol, 1,2-, 1,3- oder 1,4-Butandiol, Neopentylglykol, 1,2- oder 1,6-Hexandiol, 1,10-Decandiol, 1,12-Octadecandiol. In Frage kommen aber auch cyclische C₆-C₄₄-Alkyldiole.

Ferner bevorzugt sind Ethergruppen enthaltende Diole, wie beispielsweise Di-, Tri- oder Tetraethylen- oder -propylenglykol oder deren oligomeren Homologen.

Allgemein als Dicarbonsäure besonders bevorzugt sind lineare oder verzweigte C₂-C₄₄-Alkyldicarbonsäuren, wie Oxalsäure, Malonsäure, Bernsteinsäure, Glutarsäure, Adipinsäure, Pimelinsäure, Korksäure, Azelainsäure, Nonandicarbonsäure, Decandicarbonsäure, Undecandicarbonsäure oder deren technische Gemische. Zur Reaktion mit den Diolen können ebenfalls ungesättigte C₄-C₄₄-Dicarbonsäuren, wie Maleinsäure, Fumarsäure, Itaconsäure oder Aconitsäure, eingesetzt werden.

Die Veresterung kann nach an sich bekannten Verfahren in Gegenwart eines Katalysators in einem geeigneten Lösungsmittel bei erhöhter Temperatur unter azeotroper Entfernung des Reaktionswassers erfolgen. Als Katalysator ist Zinn(II)octoat und als Lösungsmittel Xylen bevorzugt.

Die so gewonnenen Polyesterdiole werden dann mit einem der oben unter a) genannten Diisocyanate umgesetzt und anschließend mit den bereits unter a) erwähnten Hydroxylgruppen enthaltenden Acrylaten oder Methacrylaten zum Polyurethan(meth)acrylat umgesetzt. Eine oder mehrere dieser auf den speziellen Polyesterdiolen basierenden Polyurethan(meth)acrylate können im Gemisch mit Aktivatoren und ggf. weiteren üblichen Zusätzen als Klebstoffzusammensetzung eingesetzt werden.

Bei den Verbindungen der allgemeinen Formel (A.I) für den Fall, daß n = 3 ist, handelt es sich um Umsetzungsprodukte der oben genannten Hydroxylgruppen enthaltenden Acrylate oder Methacrylate mit Isocyanaten, die erhältlich sind durch Umsetzung von geeigneten 3 bis 6 Kohlenstoffatome enthaltenden, linearen oder verzweigten dreiwertigen Alkoholen (Triolen) mit Caprolacton und anschließender Reaktion mit Diisocyanaten.

Polycaprolactontriole sind nach an sich bekannten Verfahren erhältlich durch Ringöffnungspolymerisation von Caprolacton mit geeigneten Triolen, wobei das Verhältnis von Caprolacton zu Triol 1 bis 10 beträgt, also 3 bis 30 Mol Caprolacton mit einem Mol Triol umgesetzt werden.

Als Triole kommen insbesondere solche in Frage, die ausgewählt sind aus Glycerin, 1,2,4-Butantriol, Trimethylolpropan (2-Hydroxymethyl-2-ethyl-1,3-propandiol) und Trimethylolethan (2-Methyl-2-hydroxymethyl-1,3-propandiol).

Die Reaktionsprodukte aus dem Triol und dem Caprolacton werden anschließend nach dem Fachmann bekannten Verfahren mit den unter a) genannten Diisocyanaten umgesetzt. Anschließend wird das Reaktionsprodukt aus dem Triol, dem Caprolacton und dem Diisocyanat nach an sich bekannten Verfahren mit dem Hydroxylgruppen enthaltenden Acrylat oder Methacrylat zum Polyurethan (meth) acrylat umgesetzt.

Ganz besonders zweckmäßige Hinterfütterungen werden erhalten bei Einsatz von bestimmten neuartigen Urethan(meth)acrylaten. Diese weisen mindestens drei reaktive endständige ethylenisch ungesättigten Funktionalitäten auf, die von (Meth)acrylaten abgeleitet sind.

Sie sind durch die Umsetzung von Hydroxyalkyl(meth)-acrylsäureestern mit Polyisocyanaten und Polyoxyalkylenen, die mindestens drei Hydoxyfunktionalitäten aufweisen, wobei der Anteil an Polyethylenoxid kleiner als 50 Gew.-% ist, bezogen auf die Gesamtmenge an Polyoxyalkylen, erhältlich.

Erfindungsgemäß einsetzbare Hydroxyalkyl (meth)-acrylsäureester sind Ester der (Meth)acrylsäure mit zweiwertigen, aliphatischen Alkoholen. Diese Verbindungen sind in der Fachwelt weithin bekannt. Sie können beispielsweise durch die Reaktion von (Meth)acrylsäure mit Oxiranen erhalten werden.

Zu den Oxiranverbindungen gehören unter anderem Ethylenoxid, Propylenoxid, 1,2-Butylenoxid und/oder 2,3-Butylenoxid, Cyclohexenoxid, Styroloxid, Epichlorhydrin und Glycidylester. Diese Verbindungen können sowohl einzeln als auch als Mischung verwendet werden. Die Umsetzung zu den Hydroxyalkyl(meth)acrylsäureestern ist beispielsweise in DE-A-24 39 352, DE-15 68 838 und GB 1 308 250 beschrieben.

Die so erhältlichen Hydroxyalkyl(meth)acrylsäureester sind häufig kommerziell erhältlich und daher für die erfindungsgemäßen Zwecke besonders geeignet.

Die Hydroxyalkyl(meth)acrylsäureester können auch Substituenten, wie beispielsweise Phenylreste oder Aminogruppen, enthalten. Des weiteren kann der Hydroxyalkylrest des Esters auch Polyoxyalkylengruppen enthalten, die sowohl linear als auch verzweigt sein können, wie beispielsweise Polyethylenoxid, Polypropylenoxid und Polytetramethylenoxid. Diese Gruppen weisen häufig zwischen 2 und 10 Oxyalkyen-Einheiten auf.

Bevorzugte Hydroxyalkyl (meth) acrylsäureester sind unter anderem Hydroxyethylacrylat, Hydroxyethylmethacrylat, 2-Hydroxypropylacrylat, 2-Hydroxypropylmethacrylat, 3-Hydroxypropylacrylat, 3-Hydroxypropylmethacrylat, 6-Hydroxyhexylacrylat und 6-Hydroxyhexylmethacrylat, 3-Phenoxy-2-hydroxypropylmethacrylat, Polyethoxymethacrylat, Polypropoxyrnethacrylat, Polyethylenoxid/Polytetramethylenoxidmethacrylat, Polyethylenoxid/Polypropylenoxidmethacrylat, Acrylsäure-(4-hydroxybutylester), Acrylsäure-(2-hydroxyethylester), Methacrylsäure- (hydroxymethylamid), Caprolactonhydroxyethylmethacrylat und Caprolactonhydroxyethylacrylat, hiervon sind Hydroxyethylmethacrylat, Hydroxyethylacrylat, 2-Hydroxypropylmethacrylat und 2-Hydroxypropylacrylat ganz besonders bevorzugt.

Polyisocyanate bezeichnen im Rahmen der vorliegenden Erfindung niedermolekulare Verb., die im Molekül zwei oder mehrere Isocyanat-Gruppen enthalten.

Durch Wahl des Anteils an Polyisocyanaten mit 3 oder mehr Isocyanat-Gruppen läßt sich das Eigenschaftsspektrum von Reißdehnung und Reißfestigkeit gezielt beeinflußen. Je höher der Anteil an Verbindungen mit drei oder mehr Funktionalitäten ist, desto größer wird die Reißfestigkeit. Hierbei nimmt allerdings die Reißdehnung stark ab. Dementsprechend wurde festgestellt, daß der Anteil dieser Polyisocyanate mit drei oder mehr Funktionalitäten nicht größer als 10 Gew.-%, bevorzugt nicht mehr als 5 Gew.-%, bezogen auf die Gesamtmasse an Polyisocyanaten, sein sollte. Diese Ausführungen beziehen sich allerdings nur auf die Herstellung der besonders günsti einsetzbaren Urethan(meth)acrylate gemäß Ausführungsform A), wie sie weiter oben beschrieben ist. Bei der Ausführungsform B), in der Polyoxyalkylene, die zwei Hydroxygruppen aufweisen, über Polyisocyanate verknüpft werden, die drei oder mehr Isocyanatgruppen aufweisen, ist der Anteil der Polyisocyanate mit drei oder mehr Funktionalitäten entsprechend größer.

Zu den in der vorliegenden Erfindung verwendbaren Polyisocyanaten gehören unter anderem 2,4-Toluendiisocyanat, 2,6-Toluendiisocyanat, 4,4'-Diphenylmethandiisocyanat (MDI), 4,4'-Dicyclohexyldiisocyanat, meta- und para-Tetramethylxylendiisocyanat, 3-Isocyanatomethyl-3,5,5-trimethylcyclohexylisocyanat (Isophorondiisocyanat), Hexamethylendiisocyanat, 1,5-Naphthylendiisocyanat, Dianisidindiisocyanat, Di (2-isocyanatoethyl)-bicyclo[2.2.1]-hept-5-en-2,3-dicarboxylat, 2,2,4- und 2,4,4-Trimethylenhexamethylendiisocyanat, Triphenylmethan-4,4*'*,4*''*-triisocyanat, Tris-(4-isocyanatophenyl)-thiophosphat, und Mischungen davon.

Geeignete Polyisocyanate können beispielsweise auch durch die Umsetzung von mehrwertigen Alkoholen mit Diisocyanaten oder durch die Polymerisation von Diisocyanaten erhalten werden. Des weiteren sind auch Polyisocyanate einsetzbar, die durch Umsetzung von Hexamethylendiisocyanat mit geringen Mengen an Wasser darstellbar sind. Diese Produkte enthalten Biuret-Gruppen.

Diese Verbindungen sind in der Fachwelt weithin bekannt und zum größten Teil kommerziell erhältlich. Hierzu gehören unter anderem ®Desmodur H, ®Desmodur N 100, ®Desmodur N 3300 (von BAYER), ®Basonat PLR 8401, ®Basonat PLR 8638 (von BASF), ®Tolonate HDB 75 MX, ®Tolonate HDT 90 (von Rhône Poulenc), ®Vestanat IPD, ®Vestanat T 1890/100 und ®Vestanat T 2960 (von Hüls).

Bevorzugt sind Verbindungen, deren Isocyanatgruppen unterschiedliche Reaktivitäten aufweisen. Diese Eigenschaft erleichtert die Reaktionsführung, ohne daß hierdurch eine Beschränkung erfolgen soll. Ein Beispiel für ein solch bevorzugtes Polyisocyanat ist Isophorondiisocyanat.

Als Polyisocyanate eigen sich im Rahmen der vorliegenden Erfindung auch die analogen Isothiocyanate. Da diese allerdings schlechter kommerziell erhältlich sind, sind diese Verbindungen weniger bevorzugt.

Polyoxyalkylene, die mindestens drei Hydroxyfunktionalitäten aufweisen, können beispielsweise durch Polyaddition von cyclischen Ethern, wie beispielsweise Oxiranen sowie Tetrahydrofuran, erhalten werden.

Zu den Oxiranen, die zur Polyaddition verwendet werden können, gehören unter anderem die zuvor genannten. Von diesen ist Propylenoxid bevorzugt.

Um mindestens drei Hydroxyfunktionalitäten zu erhalten, die mit Isocyanatgruppen reagieren können, können beispielsweise Alkohole als Startmoleküle eingesetzt werden, die mindestens drei Hydroxygruppen aufweisen.

Hierzu gehören unter anderem Glycerin, Trimethylolpropan, Erythrit, Pentaerythrit, Sorbit und Inosit, von diesen ist Glycerin bevorzugt.

Die Polyaddition von cyclischen Ethern an mehrwertige Alkohole ist in der Fachwelt weithin bekannt. Wertvolle Hinweise findet der Fachmann beispielsweise in Ullmann's Encyclopedia of Industrial Chemistry, 5. Aufl., Stichwort 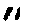 Polyoxyalkylenes".

Des weiteren können Polyoxyalkylene, die drei oder mehr Hydroxyfunktionalitäten aufweisen, auch in situ hergestellt werden. Dies wird durch Variante B) erreicht, indem Polyoxyalkylene mit zwei Hydroxyfunktionalitäten durch Polyisocyanate mit drei oder mehr Isocyanatgruppen verknüpft werden.

Das Gewichtsmittel des Molekulargewichts der Polyoxyalkylene kann in weiten Bereichen variieren. Vorzugsweise liegt es im Bereich von 2 000 bis 20 000, bevorzugt im Bereich von 4 000 bis 10 000 und ganz besonders bevorzugt im Bereich von 4 000 bis 8 000 g/mol. Wesentlich ist aber, daß die Polyetherketten eine Mindest-Flexibilität induzieren. Dementsprechend sollte die Kettenlänge der Polyetherketten im Zahlenmittel größer als 10 Einheiten, bevorzugt größer als 20 Einheiten und ganz bevorzugt größer als 30 Einheiten sein.

Die oben genannten cyclischen Ether können auch als Mischung eingesetzt werden, wodurch Copolymere entstehen. Es können auch Blockcopolymere diesen Typs eingesetzt werden.

Einige Polyoxyalkylene mit mindestens drei Hydroxyfunktionalitäten sind kommerziell erhältlich.

Bevorzugte Polyoxyalkylene sind Polyoxypropylene. Bevorzugt können auch Polytetramethylenoxide sein, die zusammen mit den Polyoxypropylenen eingesetzt werden können, wobei diese Polyoxyalkylene jeweils mindestens drei reaktive, endständige Hydroxyfunktionalitäten aufweisen.

Es wird angenommen, daß zumindest ein Teil der besonders zweckmäßigen neuartigen Urethan(meth)acrylate durch die folgende Formel (A.IV) beschreibbar sind: 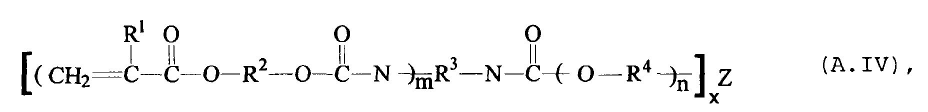 worin
- R¹: Wasserstoff oder Methyl ist,
- R²: eine lineare oder verzweigte Alkylengruppe mit 2 bis 20 Kohlenstoffatomen oder Alkylenoxide mit 4 bis 50 Kohlenstoffatomen ist,
- R³: eine bis 18 Kohlenstoffatome enthaltende aromatische, aliphatische oder cycloaliphatische Gruppe darstellt, die sich von Diisocyanaten oder Diisocyanatgemischen ableiten,
- R⁴: einen Alkylenrest mit mindestens 2 Kohlenstoffatomen unter der Voraussetzung darstellt, daß mindestens die Hälfte aller Reste R⁴ des Urethan(meth)acrylats der Formel (I) 3 oder mehr Kohlenstoffatome aufweisen,
- m: eine ganze Zahl ≥ 1,
- n: eine ganze Zahl ≥ 10,
- x: eine ganze Zahl ≥ 3 und
- Z: eine von Alkoholen mit mindestens drei Hydroxygruppen oder von Polyisocyanaten mit mindestens drei Isocyanatgruppen abgeleitete Verbindungsgruppe ist.

Der Begriff 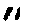 Alkylen" bedeutet ein divalenter Rest, der durch das Entfernen von zwei Wasserstoffatomen jeweils von einem nicht-benachbarten Kohlenstoffatom eines ursprünglichen Kohlenwasserstoffs erhalten wird und umfaßt Alkylene von 3 bis 18 Kohlenstoffatomen, einschließlich beispielsweise 1,3-Propylen, 1,4-Butylen, 1,5-Pentylen, 1,8-Octylen und 1,10-Decylen. Diese Reste können verzweigt als auch linear sein. Des weiteren können diese Gruppen auch substituiert sein.

Die Gruppen R² bis R⁴ sowie die Zahlen m und n leiten sich von den bei der Umsetzung eingesetzten Ausgangsstoffe ab. Diese sind weiter oben beschrieben. Dementsprechend ist m vorzugsweise gleich 1, zur Erhöhung der Reißfestigkeit können jedoch auch Polyisocyanate mit drei oder mehr Funktionalitäten eingesetzt werden, so daß folglich ein Teil der Moleküle durch Formeln darstellbar ist, in denen m > 1 ist.

Die Verbindungsgruppe Z sowie die Zahl x sind ebenfalls von den Ausgangsstoffen abhängig. Darüber hinaus können der Rest Z und der Parameter x auch durch die Reaktionsführung und die Mengenverhältnisse der Ausgangsstoffe beeinflußt werden. Wird beispielsweise Glycerin als Z gewählt, so können hieraus unter anderem auch Verbindungsgruppen der Formel (A.V) 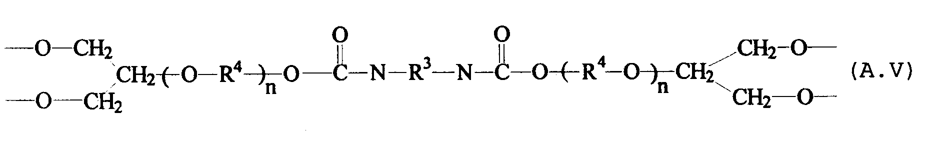 gebildet werden, die durch Kopplung von zwei Polyoxyalkylenen mit Polyisocyanaten entstehen können, wobei R³, R⁴ und n die zuvor genannte Bedeutung haben. Es ist allerdings auch die Bildung von Makromolekülen denkbar, die durch die Kopplung von mehr als zwei Polyoxyalkylenen entstehen.

Besonders bevorzugte Urethan(meth)acrylate für die vorliegende Erfindung weisen drei oder vier reaktive endständige ethylenisch ungesättigte Funktionalitäten auf.

Die für die Erfindung bevorzugten Urethan(meth)acrylate lassen sich durch Verfahren herstellen, bei denen man
i) mindestens ein Hydroxyalkyl(meth)acrylsäureester
   mit
ii) mindestens einem Polyisocyanat
   und
iii) mindestens einem Polyoxyalkylen
   umsetzt.

Hierbei sind verschiedene Reaktionen denkbar. So können Urethan(meth)acrylate für die vorliegende Erfindung in einer zweistufigen Synthese hergestellt werden. Hierbei werden beispielsweise äquimolare Mengen Hydroxyalkyl(meth)-acrylsäureester und Polyisocyanat umsetzt, wonach man das so erhaltene Reaktionsprodukt mit einem geeigneten Menge Polyoxyalkylen reagieren läßt. Bei Wahl geeigneter Polyisocyanate oder durch eine geeignete Reaktionsführung lassen sich so insbesondere Urethan(meth)acrylate mit drei reaktiven endständigen ethylenisch ungesättigten Funktionalitäten erhalten.

Es ist des weiteren denkbar die Umsetzung in einem Schritt durchzuführen. Hierbei entsteht ein Gemisch aus Urethan(meth)acrylaten mit einer unterschiedlichen Anzahl an ethylenisch ungesättigten Funktionalitäten. Es hat sich gezeigt, daß bei Verwendung von trifunktionalen Polyoxyalkylenen häufig tetrafunktionale Urethan(meth)acrylate mit Verbindungsgruppen der Formel (A.V) entstehen, wie diese weiter oben beispielhaft dargestellt sind. Die so erhaltenen Gemische können als Zusatzstoff in den (Meth)acrylatharzen ohne weitere Aufreinigung eingesetzt werden.

Die Reaktion kann in Substanz, d.h. ohne Verwendung eines weiteren Lösungsmittels durchgeführt werden. Falls gewünscht kann auch ein inertes Lösungsmittel eingesetzt werden. Hierzu gehören unter anderem Benzol, Toluol und Methylisobutylketon (MIBK), Methylethylketon (MEK).

Die Umsetzung der Isocyanatgruppen mit den Hydroxygruppen ist in der Fachwelt weithin bekannt. So kann die Reaktionstemperatur über einen weiten Bereich variieren, aber häufig liegt die Temperatur im Bereich von 30 °C bis 120 °C, vorzugsweise im Bereich von 60 °C bis 90 °C. Ähnliches gilt für den Druck bei der die Umsetzung vollzogen wird. So kann die Reaktion sowohl bei Unterdruck als auch bei Überdruck stattfinden. Vorzugsweise wird sie aber bei Normaldruck durchgeführt. Die Reaktion kann unter Luft als auch unter Schutzgasatmosphäre stattfinden, wobei vorzugsweise ein geringer Sauerstoffanteil vorhanden ist, da dieser eine mögliche Polymerisation inhibiert.

Um die Umsetzung zu beschleunigen werden häufig Katalysatoren, wie beispielsweise tertiäre Amine, zu diesen gehören unter anderem 1,4-Diazabicyclo[2.2.2]octan, N-Methylmorpholin, N,N-Diethylcyclohexylamin und N.N.N*'*,N*'*-Tetramethyldiaminomethan, oder organische Zinnverbindungen, zu diesen gehören unter anderem Dibutylzinndilaurat und Zinndioctoat, eingesetzt. Diese Katalysatoren sowie die Mengen, in denen diese Verbindungen eingesetzt werden, sind in der Fachwelt weithin bekannt und beispielsweise in Ullmann's Encyclopedia of Industrial Chemistry, 5. Aufl., Stichwort 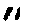 Polyurethanes" beschrieben.

Bei der Umsetzung können Inhibitoren zugesetzt werden, die eine radikalische Polymerisation der (Meth)acrylate während der Reaktion verhindern. Diese Inhibitoren sind in der Fachwelt weithin bekannt.

### Die Komponente B)

Die Komponente B) ist essentiell.

Zur Einstellung der Viskosität des Bindemittels und der gesamten Rheologie des Systems sowie der besseren Durchhärtung wird der Komponente A) ein Polymer oder Prepolymer B) zugegeben. Dieses (Pre)polymer soll in A) löslich oder quellbar sein. Auf einen Teil A) werden 0,05 bis zu 5 Teile des Prepolymers B) eingesetzt. Geeignet sind insbesondere Poly(meth)acrylate, wobei diese als festes Polymerisat in A) gelöst werden können oder wobei ein sogenannter Sirup eingesetzt werden kann, d. h. teilweise polymerisierte Massen entsprechender Monomere. Weiterhin sind geeignet Polyvinylchlorid, Polyvinylacetat, Polystyrol, Epoxydharze, Epoxy(meth) acrylate, ungesättigte Polyester, Polyurethane oder Mischungen hiervon. Diese Polymere bewirken im Bindemittel z. B. spezielle Flexibilitätseigenschaften, Schrumpfregulierung, wirken als Stabilisator, Hautbildner oder Verlaufsverbesserer.

Die Hinterfütterungsschichten enthalten bevorzugt 10 - 30 Gew.-%, besonders vorteilhaft 15 -20 Gew.-% eines hochmolekularen Polymers B), z. B. Poly(meth)acrylats, bezogen auf die Summe A) + B).

In bevorzugter Ausführungsform ist das Gewichtsverhältnis der Komponenten B) und A) des Bindemittels im Bereich von 0,1 : 1 bis 2 : 1. Hierdurch wird eine optimale Abstimmung erreicht.

Besonders zweckmäßig sind Gewichtsverhältnisse B) : A) im Bereich von 0,2 : 1 bis 1 : 1.

Die Komponente B) ((Pre)polymer) kann ein Suspensionspolymerisat, Emulsionspolymerisat und/oder Mahlgranulat aus Recyclingprozessen sein. Der mittlere Teilchendurchmesser der Prepolymere liegt dann üblicherweise bei < 0,8 mm.

Beim Prepolymer B) handelt es sich ganz vorteilhaft um eine durch Suspensionspolymerisation erhältliche PMMA-Lackperle. Diese erlaubt insbesondere auch einschichtige Verstärkungen mit ausreichender Schlagzähigkeit.

Der mittlere Teilchendurchmesser der Lackperle beträgt dabei etwa 0,1 -0,8 mm. Bevorzugt sind 0,2 - 0,8 mm, insbesondere 0,4 - 0,8 mm.

Beim (Pre)polymer B) handelt es sich bevorzugt um ein Copolymer, wobei sich Härte und Flexibilität der Verstärkungsschichten durch Art und Menge des Comonomeren im (Pre)polymer B) beeinflußen lassen. Zu einsetzbaren Comonomeren, welche am Aufbau des jeweiligen (Pre)polymeren B) beteiligt sind, gehören u. a. Acrylate und Methacrylate, die von Methylmethacrylat (MMA) verschieden sind, Vinylester, Vinylchlorid, Vinylidenchlorid, Styrol, α-Methylstyrol und die verschiedenen halogensubstituierten Styrole, Vinyl-und Isopropenylether, Diene, wie beispielsweise 1,3-Butadien und Divinylbenzol.

Bevorzugte Comonomere sind für Methylacrylat u. a., Ethylacrylat, Butylacrylat, 2-Ethylhexylacrylat, Ethylmethacrylat, n-Butylmethacrylat, i-Butylmethacrylat, 2-Ethylhexylmethacrylat, Propylacrylat, Propylmethacrylat, Methacrylsäure, Ethyltriglykolmethacrylat, Hydroxypropylmethacrylat.

Der Comonomergehalt der Prepolymere B) liegt bei Vorhandensein mehrerer Verstärkungsschichten für die erste Verstärkungsschicht günstigerweise bei 30 - 80 %, für die zweite Verstärkungsschicht günstigerweise bei 0 - < 30 %, jeweils bezogen auf das gesamte Gewicht der am Aufbau eines Prepolymeren B beteiligten Monomeren oder Monomereinheiten.

### Die Komponente C)

Die Komponente C) ist eine essentielle Komponente des Bindemittels und damit einer jeden Verstärkungsschicht.

Das erfindungsgemäß im (Meth)acrylat-System zu verwendende Bindemittel ( A) bis D) ) ist jeweils geeignet zur Kalthärtung, d. h. enthält zur Polymerisation ein Redoxsystem aus einem Beschleuniger und einem peroxydischen Katalysator oder Initiator, wobei diese Komponenten in genügender Menge zur Kalthärtung der Komponente A) zugegeben werden. Üblicherweise wird das Redoxsystem in einer Menge von 0,1001 bis 15 Gew.-%, bezogen auf das gesamte Gewicht des Bindemittels aus der Summe der Gewichte der Komponenten A) bis D), eingesetzt.

Es versteht sich, daß entweder das Redoxsystem oder zumindest Teile davon bis zum gewünschten Zeitpunkt der Polymerisation von den polymerisierbaren Substanzen des Bindemittels getrennt zu halten sind.

Der Beschleuniger wird üblicherweise in einer Menge von 0,01 bis 5 Gew.-% in A) bis D) eingesetzt, besonders vorteilhaft zu 0,5 bis 1,5 Gew.-%.

Als Beschleuniger eignen sich insbesondere Amine und Mercaptane, bevorzugt sind Dimethyl-p-toluidin, Diisopropoxy-p-toluidin, Diethylol-p-toluidin, Dimethylanilin und Glykoldimercaptoacetat. Des weiteren dienen als Beschleuniger organische Metallsalze, die üblicherweise im Bereich 0,001 bis 2 Gew.-% in A) bis D) eingesetzt werden. Geeignet sind z. B. Kobaltnaphthenat, Kupfernaphthenat, Kobaltoleat, Kupferoleat.

Als peroxydischer Katalysator eignen sich insbesondere Dibenzoylperoxid und Dilauroylperoxid. Die Peroxide werden üblicherweise zu 0,1 bis 10 Gew.-% und insbesondere zu 0,5 bis 5 Gew.-% im Bindemittel eingesetzt. Zweckmäßig wird als peroxydischer Katalysator für das System eine wäßrige 40%ige Suspension von phlegmatisiertem Dibenzoylperoxid (z. B. Cadox 40 E der Fa. Akzo) eingesetzt.

Im Bindemittel können von der Komponente C) schon die Beschleuniger, z. B. Dimethylparatoluidin, enthalten sein, ohne daß eine Polymerisation bei Umgebungstemperatur stattfindet. Durch Zugabe der restlichen Bestandteile der Komponente C) wird die Reaktion gestartet, wobei die Komponente C) üblicherweise so bemessen ist, daß das (Meth)acrylat-System eine Topfzeit im Bereich von 10 min bis 30 min hat.

Das erfindungsgemäße (Meth)acrylat-System enthält also nur unmittelbar vor der Anwendung die vollständige Komponente C), bis zum Gebrauch ist die Komponente C) nicht oder nur zum Teil enthalten.

Ganz besonders bevorzugt werden lösungsmittelfreie Härterkomponenten eingesetzt.

### Die Komponente D)

Bei der Komponente D) handelt es sich um eine optionale Komponente.

Das Bindemittel ( A) bis D) ) kann übliche Additive D) enthalten, wie sie in reaktiven (Meth)acrylat-Systemen meist eingesetzt werden.

Die Menge dieser üblichen Additive kann bei 0 bis 50 Gew.-%, vorzugsweise 0 bis 30 Gew.-% und besonders bevorzugt bei 0 bis 20 Gew.-% liegen, jeweils bezogen auf die Summe der Gewichte der Komponenten A) bis D).

Diese Additive dienen z. B. der Aufhebung der Sauerstoffinhibierung, hierfür sind insbesondere Paraffine zu 0,05 bis 5 Gew.-% im Bindemittel ( A) bis D) ) und/oder Phosphite zu 0,01 bis 1 Gew.-% in A) bis D) sowie auch eine Polymerhautbildung (paraffinfrei) geeignet. Für letzteres können, um eine nicht inhibierte Oberfläche ohne Paraffin zu erzielen, z. B. extrem hochmolekulare Polymere als Additiv, insbesondere bei Alleinverwendung von Methylmethacrylat, verwendet werden. Schon während der Härtung verdunstet Methylmethacrylat an der Oberfläche und hinterläßt eine klebfreie Oberfläche durch Polymerhautbildung.

Des weiteren können zugesetzt werden Entschäumer, Netzmittel, Thixotropierungsmittel, Inhibitoren, Mattierungsmittel, Bläuungsmittel, UV-Stabilisatoren, Polymerisationskettenregler.

Hiervon sind besonders Thixotropierungsmittel bevorzugt. Diese dienen zur Verbesserung der Lagerstabilität und des Absetzungsverhaltens von Partikeln in den Harzkomponenten.

In bevorzugter Ausführungsform ist der hinterfütterte Sanitärartikel der Erfindung daher dadurch gekennzeichnet, daß wenigstens eines der für die Hinterfütterung verwendeten Harzsysteme bezogen auf die Füllstoffe E) bis zu 0,5 Teile Thixotropiermittel auf 1 Teil der Partikel E) enthält.

Übliche Thixotropiermittel sind z. B. Kieselsäure, z. B. Aerosil®200, Aerosil®300.

### Füllstoffe (Komponente E)

Als optionale Bestandteile enthält das (Meth)acrylat-System die Komponente E), nämlich einen oder mehrere bevorzugt unter den Bedingungen der Depolymerisation der (Meth)acrylate inerte(n) Füllstoff(e).

Bevorzugt handelt es sich um Feinfüllstoffe, also solche mit mit einer Feinheit ≤ 100 µm und bezogen auf die Summe A) bis E) in einer Menge zu 0 - 75 Gew.-%. Dies wiederum bedeutet, daß die Komponente E) bezogen auf das Bindemittel A) maximal bis zum dreifachen Überschuß einsetzbar ist. Oder mit anderen Worten auf 1 Teil A) bis D) kann man zwischen 0 und 3 Teilen E) einsetzen.

Hierbei werden in Bezug auf die Erfindung unter Füllstoffen, die unter den Bedingungen der Depolymerisation der (Meth)acrylate inert sind, solche Substanzen verstanden, die die Depolymerisation von Acrylatpolymeren nicht wesentlich nachteilig beeinflussen oder gar unmöglich machen.

Acrylatpolymere, vor allem PMMA, zählen zu den wenigen Kunststoffen, die hervorragend für das direkte chemische Recycling geeignet sind. Hierunter ist zu verstehen, daß diese Polymere sich bei bestimmten Temperaturen und Drucken wieder vollständig in die entsprechenden Monomerbausteine zerlegen lassen (Depolymerisation), wenn auf geeignete Weise Wärme zugeführt wird. So werden beispielsweise zur Depolymerisation von Polymethylmethacrylat (PMMA) und Rückgewinnung des dabei anfallenden monomeren Methylmethacrylats (MMA) durch thermische Behandlung von Acrylglas-Abfällen bei Temperaturen > 200 °C, Kondensation der entstehenden Monomer-Brüden und Aufarbeitung der rohen Monomeren in der Literatur und in den Patentschriften verschiedene kontinuierliche und diskontinuierliche Verfahrensweisen beschrieben. Bei dem industriell am häufigsten angewandten Verfahren wird das Polymermaterial in einen teilweise mit Blei gefüllten Kessel gegeben, der von außen beheizt wird. Bei Temperaturen von über 400 °C depolymerisiert das Polymermaterial und die entstehenden Monomerdämpfe gelangen über eine Rohrleitung in einen Kondensator, wo sie zu einem rohen, flüssigen Monomer kondensiert werden. Entsprechende Depolymerisationsverfahren sind beispielsweise aus der DE-OS 21 32 716 bekannt.

Die Füllstoffe E), wie sie nun im Rahmen der Erfindung eingesetzt werden, dürfen keine Stoffe sein oder im Laufe der Depolymerisation Zersetzungsprodukte ergeben, die eine Aufarbeitung des rohen, flüssigen Monomers, das in der Depolymerisation recycliert werden soll, unmöglich machen oder unnötig erschweren. Bevorzugt werden daher solche Füllstoffe, die sich auf der Oberfläche des Metalls als Schlacke sammeln und beispielsweise während des Betriebs des Reaktors mit einem Rechen, Schieber oder dergleichen entfernt werden können. Unter Verwendung erfindungsgemäßer Füllstoffe E) liegt somit ein hinterfütterter Sanitärartikel vor, der vollständig recyclierbar ist.

Als Füllstoffe werden meist mineralische Füllstoffe verwendet. Zu den in einem einzigen oder im ersten und/oder zweiten (Meth) acrylat-System vorteilhaft einsetzbaren Füllstoffen gehören im Rahmen der Erfindung Glimmer, Aluminiumhydroxid, calcitische Füllstoffe wie etwa Kreide und Marmor, quarzitische Füllstoffe wie Wollastonit, Cristobalit und ähnliche, amorphe Silicate, Flugasche, Siliciumcarbid und/oder Schwerspat.

Für die Erfindung sind hiervon Glimmer, Aluminiumtrihydrat (Aluminiumhydroxid), quarzitische und calcitische Füllstoffe besonders geeignet. Äußerst vorteilig ist der Einsatz von Glimmer sowohl im ersten als auch zweiten (Meth)acrylat-System oder auch im (Meth)acrylat-System einer einschichtigen Verstärkung.

Die Füllstoffe E) werden entweder allein oder in Kombination von mehreren verwendet. Die Menge liegt wie bereits ausgeführt zwischen 0 und 75 Gew.-% bezogen auf die Summe der Komponenten A) bis E) des Bindemittels + Füllstoffe.

Liegt der Anteil an Füllstoffen E) höher als 75 Gew.-%, so kann dies die Misch- und Verarbeitungseigenschaften des Hinterfütterungsmaterials negativ beeinflussen, insbesondere kann eine Mischung mit so hohem Füllstoffanteil nur noch schlecht versprüht oder gepumpt werden. Außerdem kann bei höheren Füllstoffgehalten nicht mehr sichergestellt werden, daß genügend Bindemittel zur Verfügung steht, um eine stabile Beschichtung zu erhalten.

Andererseits ist erfindungsgemäß ein relativ hoher Anteil an Füllstoffen E) bevorzugt. Insbesondere wird aus Kostengründen eine möglichst hohe Menge angestrebt. Bevorzugt sind Füllstoffe E) in einer Menge von 40 - 65 Gew.-%, besonders bevorzugt in einer Menge von 50 - 60 Gew.-%, jeweils bezogen auf die Summe der Komponenten A) - E), enthalten.

Für die Erfindung werden glatte Füllstoffe bevorzugt. Hierunter sind möglichst glatte Oberflächen aufweisende Partikel zu verstehen. Die Partikelgröße der erfindungsgemäßen Füllstoffe beträgt ≤ 100 µm. Es handelt sich mithin um Feinstfüllstoffe. Die Partikelgröße der Füllstoffe E) wird durch Siebanalyse bestimmt und ist in der angegebenen Größe bevorzugt, um die Verarbeitung des Füllstoffs E) + Bindemittel A) - D)-Systems zu gewährleisten. Insbesondere bei Verarbeitung durch Versprühen wird die Größe der Füllstoffpartikel durch das verwendete Düsensystem limitiert. Die Größe der Füllstoffpartikel E) ist jedoch vom Fachmann an die Erfordernisse des Verarbeitungssystems anzupassen.

Hinzu kommt, daß kleine Füllstoffpartikel mit glatter Oberfläche besser von Bindemittel umhüllt sind, weniger zu Aggregation neigen und keine Luftpolster in der Verstärkungsschicht ausbilden.

Daher kennzeichnet sich ein hinterfütterter Sanitärartikel der Erfindung in besonderer Abwandlung dadurch, daß die Füllstoffe E) des (Meth)acrylat-Systems, welches zur ersten rückseitigen Schicht aushärtet, eine Feinheit ≤ 30 µm aufweisen. Solcherart Feinstfüllstoffe erlauben eine besonders saubere und einfache Aushärtung der ersten Schicht sowie ein problemloses Auftragen der zweiten Schicht.

Besonders zweckmäßige Ausführungsformen an Füllstoffen umfassen bestimmte Mikropartikel. Hierunter sind Partikel einer mittleren Größe im Bereich von 1 bis 1000 µm zu verstehen. Zweckmäßig sind 1 bis 500 µm. Bevorzugt 10 bis 250 µm. Ganz besonders vorteilhaft sind mittlere Partikeldurchmesser von 50 bis 200 µm.

Für die erfindungsgemäße Verstärkungsschicht ist eine ganze Reihe von Mikropartikeln einsetzbar. Besonders von Vorteil sind hohle Partikel, die regelmäßig oder unregelmäßig sein können, die jedoch bevorzugt kugelförmig oder sphärisch sind und in ihrem Hohlraum inertes Gas aufweisen.

Für den Fall von sphärischen oder kugeligen Mikrohohlkugeln liegt der mittlere Partikeldurchmesser erfindungsgemäß nützlicher Verstärkungspartikel im Bereich von 1 bis 1000 µm. Bevorzugt ist der mittlere äußere Durchmesser der Mikrohohlkugeln 1 bis 500 µm. Besondere Ausführungsformen umfaßen hohlkugelige Mikropartikel mit mittleren Partikeldurchmessern zwischen 10 und 250 µm. Äußerst zweckmäßig sind mittlere Partikeldurchmesser im Bereich von 50 bis 200 µm.

Zu den als Komponente E) verwendbaren Mikrohohlkugeln zählen grundsätzlich Mikrohohlkugeln aus unterschiedlichen Materialien, wie z.B. Glas, Metallen, Metalloxiden, Polymeren und organischen Verbindungen.

Bevorzugt werden für die Erfindung Mikrohohlkugeln aus Kunststoff eingesetzt.

Besonders bevorzugt werden bei der vorliegenden Erfindung als Komponente E) für die Verstärkungsschicht Mikrohohlkugeln eingestetzt, die aus Polymeren bestehen, wie z.B. Polystyrol, Polyvinylchlorid, Polyvinylidenchlorid, Polyvinylacetat, Polyacrylat, Polyacrylnitril, Polybutadien, Polyethylenterephthalat; desweiteren bevorzugt sind auch Mikrohohlkugeln aus Copolymeren oder Terpolymeren, welche auf solchen Monomeren basieren, die die genannten Copolymeren ausbilden.

Beispiele für solche Polymere und Copoymere, welche die Hohlkugeln selbst ausbilden, sind unter anderem Vinylidenchlorid-Acrylnitrilcopolymer, Polyvinylidenchlorid, Acrylnitrilvinylidenchloridcopolymer, Acrylnitrilmethacrylolnitrilcopolymer, Acrylnitrildivinylbenzol-vinylidenchloridcopolymer u. dgl.

Im Rahmen der Erfindung lassen sich als Komponente E) bevorzugt auch Mischungen von Mikrohohlkugeln einsetzen.

Die gemäß der Erfindung einsetzbaren Mikrohohlkugeln oder Mikropartikel können zur Anpassung der Verarbeitungseigenschaften oder zur Variation der Verstärkungseigenschaften mit Überzügen beschichtet sein.

Besonders geeignet sind auch Abwandlungen von den einfachen Mikrohohlkugeln. Beispielsweise sind solche Mikrohohlkugeln von besonderem Interesse, die aus Polymeren bestehen, welche mit mineralischen Stoffen überzogen (beschichtet) sind, um eine bessere Stabilität gegen den Einfluß des umgebenden Mediums (Methacrylat-Harz) zu gewährleisten.

Die Beschichtung der Mikrohohlkugeln kann aus feinstkörnigen Mineralstoffen wie z.B. Calciumcarbonat, Quarz, Glimmer, Aluminiumhydroxid, Cristobalit und dergleichen bestehen.

Besonders bevorzugt sind Mikrohohlkugeln, insbesondere solche aus Kunststoff, die mit Calciumcarbonat beschichtet sind.

Die im Rahmen der Erfindung als Komponente E) besonders günstig wirkenden Mikrohohlkugeln können neben anderen Methoden grundsätzlich auf die folgenden Arten und Weisen hergestellt werden:
◆ Beschichtung eines Kerns (Opferkern) mit dem betreffenden Material, anschließend wird der Kern durch unterschiedlich Methoden entfernt (z.B. Auflösen in einem Lösemittel, Verdampfen oder Verflüchtigen), so daß nur die Schale übrig bleibt. Mit dieser Methode werden vor allem Mickohohlkugeln aus keramischen Werkstoffen und Metalloxiden hergestellt.
◆ Herstellung in einem Düsenreaktor (Nozzle-Reactor System):
   Hierbei werden über speziell konstruierte Düsensysteme (konzentrische Öffnungen) das in den Mikrohohlkugeln befindliche Gas sowie das verflüssigte Material für die Hülle der Kugeln versprüht.
   In einer Art Sprühturm kühlt das verflüssigte Material ab und erstarrt zu einer mit dem jeweiligen Gas (z.B. H₂O, CO₂, SO₂, Luft, N₂, etc.) gefüllten Mikrohohlkugel. Mit dieser Methode stellt man vor allem Mikrohohlkugeln aus polymeren Materialien her.
◆ Phasentrennung von Emulsionen durch Flüssigextraktion: Hierbei werden die in einer Emulsion vorliegenden kugelförmigen, mit Flüssigkeit gefüllten Partikel (Micellen) von der umgebenden Flüssigkeit abgetrennt und anschließend getrocknet. Mit dieser Methode stellt man vor allem Mikrohohlkugeln aus Metalloxiden, aber auch aus Polymeren her.

Eine Übersicht zur Herstellung der Mikrohohlkugeln findet sich beispielsweise in Mat. Res. Soc. Symp. Proc. Vol 372, 1995 Materials Research Society bei David L. Wilcox, Sr. und Morris Berg, Seiten 3 bis 13, und der darin zitierten Literatur.

Zu besonders geeigneten Typen von gasgefüllten Mikrohohlkugeln aus Kunststoff gehören unter anderem ®Dualite-Typen, z.B. ®Dualite M 6017AE, (Pierce & Stevens Corp.); ®Expancel-Typen, z.B. ®Expancel 642 WU, ®Ropaque-Typen, z.B. ®Ropaque OP 62 (Rohm and Haas Co.), Matsumoto Microsphere, z.B. Microsphere F-30E (Matsumoto Yushi Seiyaku Co. Ltd.) und dergleichen.

In einer besonderen Ausgestaltung des erfindungsgemäßen Sanitärartikels weist dieser die Mikrokugeln im (Meth)acrylat-System in einer Menge im Bereich von 1 bis 25 Gew.-%, bezogen auf das Gewicht der Summe der Bestandteile A)-E), auf.

Die gesamte Verstärkung ist üblicherweise 1,5 bis 10 mm dick. Zwei Schichten zusammen sind i. d. R. ebenso etwa 1,5 bis 10 mm dick. Es ist hierbei von Vorteil, die erste Schicht dünner und die zweite Schicht dicker als die erste Schicht auszubilden. Vorteilhaft ist die zweite Schicht etwa 2 bis 3 x so dick wie die erste. Vorteilig ist die gesamte Verstärkung in jedem Fall 1,5 bis <8 mm dick.

Zweckmäßig weist die erste Schicht eine Dicke im Bereich von 0,5 - 2,5 mm und die zweite Schicht eine Dicke im Bereich von 3 - <5,5 mm auf.

Zur vorliegenden Erfindung gehört auch ein Verfahren zur Herstellung eines glasfaser- und asbestfreien, hinterfütterten Sanitärartikels, bei dem ein reaktives Harzsystem auf die Rückseite eines Formteils aus Acrylglas aufgesprüht wird, wobei das Harzsystem im Kontakt mit dem Acrylglasformteil aushärtet und sich dabei mit dem Acrylglasformteil verbindet, wobei das Verfahren dadurch gekennzeichnet ist, daß ein überwiegend auf (Meth)acrylaten basierendes Harzsystem verwendet wird, das zu einem Polymer mit einer Glasumwandlungstemperatur Tg > 70 °C aushärtet und bezogen auf 1 Gew.-Teil des Harzsystems bis zu 2,33 Gew.-Teile solcher Füllstoffe aufweist, die unter den Bedingungen der Depolymerisation des Acrylglasformteils inert sind, wobei das Harzsystem die hierin angegebene Zusammensetzung aufweist.

In einer Variante wird das Verfahren bevorzugt so ausgeführt, daß zwei voneinander verschiedene, überwiegend auf (Meth)acrylaten basierende Harzsysteme nacheinander verwendet werden, die jeweils zu einem Polymer mit einer Glasumwandlungstemperatur Tg > 70 °C aushärten und bezogen auf 1 Gew.-Teil des Harzsystems bis zu 2,33 Gew.-Teile solcher Füllstoffe aufweisen können, die unter den Bedingungen der Depolymerisation des Acrylglasformteils inert sind, wobei auf das Acrylglasformteil zunächst ein erstes Harzsystem aufgesprüht wird, welches die erforderliche Schlagzähigkeit vermittelt, und nach dessen Aushärtung darauf ein zweites Harzsystem aufgesprüht wird, das die notwendige Steifigkeit verleiht.

Aus der EP-A-0 693 503 ist es bekannt, ein auf (Meth)acrylaten basierendes Harzsystem im Sprühverfahren aufzubringen. In Analogie hierzu werden in einer bevorzugten erfindungsgemäßen Variante zwei Schichten nacheinander aufgebracht, wobei zusätzlich bei der Auswahl der möglichen Füllstoffe auf deren Unschädlichkeit in der Depolymerisation der Polymerisate geachtet wird, durch eine sorgfältige Abstimmung von Materialauswahl (sowohl Formteil als auch Hinterfütterung basieren auf (Meth)acrylaten, Füllstoffe sind inert) und Aufbringverfahren der Hinterfütterungsschichten ein hundertprozentig recyclebares Produkt zugänglich wird, das gleichzeitig in Folge des Sprühverfahrens besonders materialsparend und einfach herstellbar ist.

Außerdem und vor allem werden in allen, sei es in einer oder in beiden oder mehreren Schichten Glasfasern vermieden.

Um das Absetzverhalten der Füllstoffe E) bei längeren Lagerzeiten vor Gebrauch zu verbessern und damit die Lagerstabilität zu erhöhen, ist es bevorzugt, daß die Füllstoffe E) vor Verwendung des reaktiven Harzsystems mit einem Homogenisierungsaggregat unter Zusatz eines Thixotropiermittels in einer Menge von 0,01 - 0,5 Teile bezogen auf 1 Teil E) in das erste und/oder zweite System aus Bindemittel A) - D) eingearbeitet werden.

Durch Verwendung eines geeigneten Homogenisierungsaggregats bei der Herstellung des Harzsystems werden außerdem die Größe und die Form der Füllstoffpartikel positiv beeinflußt.

Die Verstärkungsschicht kann auf das Acrylglasformteil beliebig aufgebracht werden. Unter anderem durch Auftragen, Aufsprühen, Gießen und dergleichen. Bevorzugt wird die Verstärkungsschicht auf die Rückseite des Acrylglasformteils aufgesprüht. Hierbei werden jeweils bevorzugt während des Sprühens zwei Materialströme miteinander gemischt, wobei ein erster der Materialströme die polymerisierbaren Bestandteile der Harzmischung und ein zweiter Materialstrom die bis zur Polymerisation von den polymerisierbaren Bestandteilen des Harzsystems getrennt zu haltenden Bestandteile der Komponente C) des Harzsystems aufweist.

Zum Aufsprühen werden bevorzugt Hochdruck-Airless-Spritzanlagen (z. B. Aplicator IP 8000 der Fa. ESSKA, Hamburg), Flächenstrahl-Spritzanlagen der Fa. Glascraft oder Zwei-Komponenten-Dosier- und Mischanlage mit Arbeitsdruck 40 bis 60 bar (z.B. 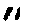 Twin-Injektion" der Firma Reinhardt Technik, Kierspe) verwendet. Unter Verwendung solcher Anlagen lassen sich insbesondere im Fächerstrahlverfahren Beschichtungen unter gleichzeitiger deutlicher Verminderung der Emissions-Werte aufbringen. Dies kann vorteilhaft mit Sprühpistolen geschehen, die eine individuelle Regelung des verlustfreien Laminatauftrags ermöglichen.

Besonders geeignete Misch- und Zerstäubungsverfahren sind Gegenstand der EP 38 481.

Das Verfahren der Erfindung zeichnet sich insbesondere dadurch aus, daß es bei Umgebungstemperatur durchgeführt werden kann, d. h. üblicherweise zwischen 0 und 35 °C, aber auch, sofern gewünscht, bei extremeren Temperaturen wie -10 bis +45 °C.

Im folgenden wird die Erfindung anhand von Ausführungsbeispielen und Vergleichsbeispielen näher erläutert.

### Vergleichsbeispiel 1 (VB1):

Einschichtige Verstärkung ohne Mikrohohlkugeln, ca. 3 mm Dicke, Bindemittel ohne Urethan(meth)acrylat;
40,00 Gew.-Teile eines Bindemittels bestehend aus
   - 18,00 %: Polymethylmethacrylat
   - 75,00 %: Methylmethacrylat
   - 5,00 %: Triethylenglykoldimethacrylat
   - 0,50 %: Paraffine (Schmelzpunkt <56 °C)
   - 0,50 %: Dimethylparatoluidin
   - 0,50 %: Diisopropoxyparatoluidin
   - 0,50 %: Additive, Stabilisatoren
   werden mit
   - 60,00 Gew.-Teilen: Glimmer (<100 µm) und
   - 0,10 Gew.-Teilen: Thixotropierungsmittel (Byk 410)
   über 4 Stunden verrührt.

Die Mischung weist eine Viskosität von 11000 - 13000 mPas auf.

Diese Mischung wird mit einer Hochdruck-Airless-Spritzanlage vom Typ Appilkator IP 8000 zusammen mit Cadox 40 E im Volumenverhältnis 100 : 2 bis 100 : 5, mit einem Spritzdruck von 180 bar auf das geformte Acrylglasteil aufgetragen. Die Auftragsmenge beträgt 6 - 7 kg/m². Eine manuelle Nachbearbeitung ist nicht erforderlich. Es wird eine Hinterfütterungsschicht von etwa 3 mm Dicke erhalten.

Bei Härterdosierung 100 : 2 beträgt die Aushärtungszeit etwa 15 - 25 min.
Bei Härterdosierung 100 : 4 beträgt die Aushärtungszeit etwa 5 - 15 min.

### Vergleichsbeispiel 2 (VB2):

Zweischichtige Verstärkung, beide Schichten ohne Mikrohohlkugeln, gemeinsame Stärke der beiden Schichten zusammen etwa 6 mm, Bindemittel ohne Urethan(meth)acrylat;

### (i) erste rückseitige Verstärkungsschicht

40,00 Gew.-Teile eines Bindemittels bestehend aus
   - 30,00 %: Polymethylmethacrylat
   - 42,00 %: Methylmethacrylat
   - 25,70 %: 2-Ethylhexylacrylat
   - 0,50 %: Triethylenglykoldimethacrylat
   - 0,80 %: Diisopropylolparatoluidin
   - 0,70 %: Dimethylparatoluidin
   - 0,30 %: Paraffine (Schmelzpunkt <56 °C)
   werden mit
   - 60,00 Gew.-Teilen: Calciumcarbonat (<100 µm) und
   - 0,10 Gew.-Teilen: Thixotropierungsmittel (Byk 410)
   über 4 Stunden verrührt.

Die Mischung weist eine Viskosität von 6000 - 10000 mPas auf.

Diese Mischung wird mit einer Hochdruck-Airless-Spritzanlage vom Typ Applikator IP 8000 zusammen mit Cadox 40 E im Volumenverhältnis 100 : 2 bis 100 : 5, mit einem Spritzdruck von 180 bar auf das geformte Acrylglasteil aufgetragen. Eine manuelle Nachbearbeitung ist nicht erforderlich. Die Auftragsmenge beträgt 2 - 4 kg/m².

Bei Härterdosierung 100 : 2 beträgt die Aushärtungszeit 15 - 40 min.
Bei Härterdosierung 100 : 5 beträgt die Aushärtungszeit 5 - 20 min.

Anschließend erfolgt ein zweiter Spritzauftrag mit folgender Mischung:

### (ii) zweite, äußere Verstärkungsschicht

40,00 Gew.-Teile eines Bindemittels bestehend aus
   - 18,00 %: Polymethylmethacrylat
   - 75,00 %: Methylmethacrylat
   - 5,00 %: Triethylenglykoldimethacrylat
   - 0,50 %: Paraffine (Schmelzpunkt <56 °C)
   - 0,50 %: Dimethylparatoluidin
   - 0,50 %: Diisopropylolparatoluidin
   - 0,50 %: Additive, Stabilisatoren
   werden mit
   - 60,00 Gew.-Teilen: Glimmer (<100 µm)
   - 0,10 Gew.-Teilen: Thixotropierungsmittel (Byk 410)
   über 4 Stunden verrührt.

Die Mischung weist eine Viskosität von 11000 - 13000 mPas auf.

Die Härterdosierung beträgt 100 : 2 bis 100 : 5.
Der Spritzdruck 180 bar.
Die Auftragsmenge beträgt 6 - 10 kg/m².
Die Aushärtungszeit beträgt 15 - 30 min bei Härterdosierung 100 : 2.

Bei Härterdosierung 100 : 5 beträgt die Aushärtungszeit etwa 5 - 15 min.

### Vergleichsbeispiel 3 (VB3):

Einschichtige Verstärkung mit Mikrohohlkugeln, Dicke der Hinterfütterungsschicht ca. 3 mm, Bindemittel ohne Urethan(meth)acrylat;
40,00 Gew.-Teile eines Bindemittels bestehend aus
   - 18,00 %: Polymethylmethacrylat
   - 75,00 %: Methylmethacrylat
   - 5,00 %: Triethylenglykoldimethacrylat
   - 0,50 %: Paraffine (Schmelzpunkt <56 °C)
   - 0,50 %: Dimethylparatoluidin
   - 0,50 %: Diisopropoxyparatoluidin
   - 0,50 %: Additive, Stabilisatoren
   werden mit
   - 54,00 Gew.-Teilen: Glimmer (<100 µm)
   - 6,00 Gew.-Teilen: gasgefüllte mit Calciumcarbonat beschichtete Mikrohohlkugeln aus Acrylnitril-Copolymer mit einer mittleren Partikelgröße von etwa 95 µm vom Typ ®Dualite 6032 der Fa. Pierce & Stevens Corporation und
   - 0,10 Gew.-Teilen: Thixotropierungsmittel (Byk 410)
   über 4 Stunden verrührt.

Die Mischung weist eine Viskosität von 11000 - 13000 mPas auf.

Diese Mischung wird mit einer Hochdruck-Airless-Spritzanlage vom Typ Applikator IP 8000 zusammen mit Cadox 40 E im Volumenverhältnis 100 : 2 bis 100 : 5, mit einem Spritzdruck von 180 bar auf das geformte Acrylglasteil aufgetragen. Die Auftragsmenge beträgt etwa 4 - 7 kg/m². Eine manuelle Nachbearbeitung ist nicht erforderlich. Es wird eine Hinterfütterungsschicht von etwa 3 mm Dicke erhalten.

Bei Härterdosierung 100 : 2 beträgt die Aushärtungszeit etwa 15 - 25 min.
Bei Härterdosierung 100 : 4 beträgt die Aushärtungszeit etwa 5 - 15 min.

### Vergleichsbeispiel 4 (VB4):

Zweischichtige Verstärkung mit erster Verstärkungsschicht mit Mikrohohlkugeln, zweite Verstärkungsschicht ohne Mikrohohlkugeln, Dicke jeder Verstärkungsschicht etwa 1,5 mm, Dicke der gesamten Verstärkung etwa 3 mm, beide Bindemittel ohne Urethan (meth) acrylat;

### (i) erste Verstärkungsschicht:

40,00 Gew.-Teile eines Bindemittels bestehend aus
   - 30,00 %: Polymethylmethacrylat
   - 42,00 %: Methylmethacrylat
   - 25,70 %: 2-Ethylhexylacrylat
   - 0,50 %: Triethylenglykoldimethacrylat
   - 0,80 %: Diisopropylolparatoluidin
   - 0,70 %: Dimethylparatoluidin
   - 0,30 %: Paraffine (Schmelzpunkt <56 °C)
   werden mit
   - 54,00 Gew.-Teilen: Glimmer (<100 µm)
   - 6,00 Gew.-Teilen: gasgefüllte mit Calciumcarbonat beschichtete Mikrohohlkugeln aus Acrylnitril-Copolymer mit einer mittleren Partikelgröße von etwa 95 µm vom Typ ®Dualite 6032 der Fa. Pierce & Stevens Corporation und
   - 0,10 Gew.-Teilen: Thixotropierungsmittel (Byk 410)
   über 4 Stunden verrührt.

Die Mischung weist eine Viskosität von 6000 - 10000 mPas auf.

Diese Mischung wird mit einer Hochdruck-Airless-Spritzanlage vom Typ Applikator IP 8000 zusammen mit Cadox 40 E im Volumenverhältnis 100 : 2 bis 100 : 5, mit einem Spritzdruck von 180 bar auf das geformte Acrylglasteil aufgetragen. Eine manuelle Nachbearbeitung ist nicht erforderlich. Die Auftragsmenge beträgt etwa 2 - 3,5 kg/m².

Bei Härterdosierung 100 : 2 beträgt die Aushärtungszeit 15 - 40 min.
Bei Härterdosierung 100 : 5 beträgt die Aushärtungszeit 5 - 20 min.

Anschließend erfolgt ein zweiter Spritzauftrag mit folgender Mischung:

### (ii) zweite Verstärkungsschicht:

40,00 Gew.-Teile eines Bindemittels bestehend aus
   - 18,00 %: Polymethylmethacrylat
   - 75,00 %: Methylmethacrylat
   - 5,00 %: Triethylenglykoldimethacrylat
   - 0,50 %: Paraffine (Schmelzpunkt <56 °C)
   - 0,50 %: Dimethylparatoluidin
   - 0,50 %: Diisopropylolparatoluidin
   - 0,50 %: Additive, Stabilisatoren
   werden mit
   - 60,00 Gew.-Teilen: Glimmer (<100 µm)
   - 0,10 Gew.-Teilen: Thixotropierungsmittel (Byk 410)
   über 4 Stunden verrührt.

Die Mischung weist eine Viskosität von 11000 - 13000 mPas auf.

Die Härterdosierung beträgt 100 : 2 bis 100 : 5.
Der Spritzdruck 180 bar.
Die Auftragsmenge beträgt 2 - 3,5 kg/m².
Die Aushärtungszeit beträgt 15 - 30 min bei Härterdosierung 100 : 2.

Bei Härterdosierung 100 : 5 beträgt die Aushärtungszeit etwa 5 - 15 min.

### Beispiel 5 (B5)

### 5.1. Herstellung von mehrwertigen (tetrafunktionellen) Urethan(meth)acrylaten in einer einstufigen Synthese

Herstellung von mehrwertigem Urethanmethacrylat in einer einstufigen Synthese

In einem Rundkolben mit Rückflußkühler, Thermometer, Rührer und Tropftrichter werden 0,2 Mol ®Voranol CP 6055 (DOW), 0,4 Mol Hydroxyethylmethacrylat (HEMA), 500 ppm 2,6-Di-tert.-butyl-4-methylphenol, bezogen auf die voraussichtliche Menge des Endprodukts, 0,46 Mol IPDI und 2*10⁻³ Mol Dibutylzinndilaurat (DBTDL) vorgelegt und eine Stunde bei Raumtemperatur gerührt. Anschließend wird die Temperatur der Mischung innerhalb einer Stunde kontinuierlich auf 80°C angehoben. Danach wird die Temperatur ca. 5 Stunden auf 80°C gehalten, bis der Gehalt an Isocyanat-Gruppen auf unter 0,1% abgefallen ist, wobei sich oberhalb der Mischung ein Stickstoff-Sauerstoff-Gemisch mit ca. 7 Vol.-% Sauerstoff befindet. Restmengen an Isocyanatgruppen werden mit einer stöchiometrischen Menge HEMA umgesetzt, sofern der Isocyanatgehalt trotz verlängerter Nachreaktionszeit nicht auf unter 0,1% zurückgeht. Anschließend werden der Mischung 500 ppm 2-tert-Butyl-4,6-dimethylphenol, bezogen auf die Gesamtmasse des Endprodukts, beigefügt.

Es wird bei dieser Umsetzung ein Gemisch von Urethanmethacrylaten erhalten, das ohne weitere Aufarbeitung verwendet werden kann.

### 5.2. Herstellung erfindungsgemäß hinterfütterter Sanitärartikel:

Einschichtige Verstärkung mit Zusatz von Urethanmethacrylat aus Schritt 5.1 zum Bindemittel, ohne Mikrohohlkugel-Füllstoffe, Dicke der Hinterfütterungsschicht ca. 3 mm;
40,00 Gew.-Teile eines Bindemittels bestehend aus
   - 18,00 %: Polymethylmethacrylat
   - 66,00 %: Methylmethacrylat
   - 5,00 %: Triethylenglykoldimethacrylat
   - 9,00 %: Urethanmethacrylat gemäß 5.1
   - 0,50 %: Paraffine (Schmelzpunkt <56 °C)
   - 0,50 %: Dimethylparatoluidin
   - 0,50 %: Diisopropoxyparatoluidin
   - 0,50 %: Additive, Stabilisatoren
   werden mit
   - 60,00 Gew.-Teilen: Glimmer (<100 µm)
   und
   - 0,10 Gew.-Teilen: Thixotropierungsmittel (Byk 410)
   über 4 Stunden verrührt.

Die Mischung weist eine Viskosität von 11000 - 13000 mPas auf.

Diese Mischung wird mit einer Hochdruck-Airless-Spritzanlage vom Typ Applikator IP 8000 zusammen mit Cadox 40 E im Volumenverhältnis 100 : 2 bis 100 : 5, mit einem Spritzdruck von 180 bar auf das geformte Acrylglasteil aufgetragen. Die Auftragsmenge beträgt etwa 4 - 7 kg/m². Eine manuelle Nachbearbeitung ist nicht erforderlich. Es wird eine Hinterfütterungsschicht von etwa 3 mm Dicke erhalten.

Bei Härterdosierung 100 : 2 beträgt die Aushärtungszeit etwa 15 - 25 min.
Bei Härterdosierung 100 : 4 beträgt die Aushärtungszeit etwa 5 - 15 min.

### Beispiel 6 (B6)

### 6.1. Herstellung von mehrwertigen (tetrafunktionellen) Urethan(meth)acrylaten in einer einstufigen Synthese

Es wurde ein mehrfachfunktionelles Urethan(meth)acrylat wie in Beispiel 5.1 hergestellt.

### 6.2. Herstellung erfindungsgemäß hinterfütterter Sanitärartikel:

Einschichtige Verstärkung mit Zusatz von Urethanmethacrylat aus Schritt 5.1 zum Bindemittel und mit Mikrohohlkugel-Füllstoff, Dicke der Hinterfütterungsschicht ca. 3 mm;
40,00 Gew.-Teile eines Bindemittels bestehend aus
   - 18,00 %: Polymethylmethacrylat
   - 66,00 %: Methylmethacrylat
   - 5,00 %: Triethylenglykoldimethacrylat
   - 9,00 %: Urethanmethacrylat gemäß 5.1
   - 0,50 %: Paraffine (Schmelzpunkt <56 °C)
   - 0,50 %: Dimethylparatoluidin
   - 0,50 %: Diisopropoxyparatoluidin
   - 0,50 %: Additive, Stabilisatoren
   werden mit
   - 54,00 Gew.-Teilen: Glimmer (<100 µm)
   - 6,00 Gew.-Teilen: gasgefüllte mit Calciumcarbonat beschichtete Mikrohohlkugeln aus Acrylnitril-Copolymer mit einer mittleren Partikelgröße von etwa 95 µm vom Typ ®Dualite 6032 der Fa. Pierce & Stevens Corporation und
   - 0,10 Gew. -Teilen: Thixotropierungsmittel (Byk 410)
   über 4 Stunden verrührt.

Die Mischung weist eine Viskosität von 11000 - 13000 mPas auf.

Diese Mischung wird mit einer Hochdruck-Airless-Spritzanlage vom Typ Applikator IP 8000 zusammen mit Cadox 40 E im Volumenverhältnis 100 : 2 bis 100 : 5, mit einem Spritzdruck von 180 bar auf das geformte Acrylglasteil aufgetragen. Die Auftragsmenge beträgt etwa 4 - 7 kg/m². Eine manuelle Nachbearbeitung ist nicht erforderlich. Es wird eine Hinterfütterungsschicht von etwa 3 mm Dicke erhalten.

Bei Härterdosierung 100 : 2 beträgt die Aushärtungszeit etwa 15 - 25 min.
Bei Härterdosierung 100 : 4 beträgt die Aushärtungszeit etwa 5 - 15 min.

Nach der Aushärtung werden die in den Beispielen 5 und 6 sowie den Vergleichsbeispielen 1 bis 4 erhaltenen Wannen den Prüfungen nach DIN EN 198, DIN ISO 4624 DIN ISO 178 und DIN ISO 179 unterzogen. Verwendet wurden die Vorschriften aus den jeweils im Jahr 1996 geltenden Vorschriften.

Bei der Prüfung im Warmwasserwechseltest nach DIN EN 198 wird eine Wanne wechselnd mit Wasser von 75 °C und dann von 12 °C befüllt. Die DIN EN 198 fordert das schadlose Bestehen von 100 solcher Zyklen. Das Bestehen beinhaltet, daß der Zustand der Wannen keine Ablösung der Verstärkung sowie keine Risse im Acrylglas aufweist.

Das Verhalten bei Stoßbeanspruchung gemäß Kugelfalltest nach DIN EN 198 gilt dann als akzeptabel, wenn keine Beschädigungen der Oberfläche und der Unterseite einer Wanne nach Fall einer Stahlkugel von 200 g aus einer Höhe von 1 m auf den Wannenboden auftreten.

Diese und die weiteren Ergebnisse können der Tabelle 1 entnommen werden.

**Tabelle 1**

| Beispiel/Vergleichsbeispiel | Schlagfestigkeit DIN ISO 179 | Haftzugfestigkeit DIN ISO 4624 | Biegefestigkeit DIN ISO 178 | Warmwasserwechseltest DIN EN 198 | Kugelfall test DIN EN 198 |
|---|---|---|---|---|---|
| | kJ/m² | N/mm² | MPa | Zahl der Zyklen | Beschädigung |
| VB1 | 8 | 0,3 | 15 | 150 (defekt) | keine |
| VB2 | 10 | - | - | 200 (defekt) | keine |
| VB3 | 25 | 0,5 | 25 | 350 (intakt) | keine |
| VB4 | 15 | 0,5 | 20 | 210 (defekt) | keine |
| B5 | 17 | 0,4 | 30 | 350 (intakt) | keine |
| B6 | 25 | 0,6 | 30 | 350 (intakt) | keine |

## Patentansprüche

1. Hinterfütterter Sanitärartikel, aufweisend ein Acrylglasformteil, das an seiner Rückseite mit glasfaser- und asbestfreiem Polymermaterial verstärkt ist, welches fest mit dem Acrylglasformteil verbunden ist, wobei das verstärkende Polymermaterial durch Aushärtung eines auf die Rückseite des Acrylglasformteils aufgebrachten polymerisierbaren, kalthärtenden, reaktiven (Meth) acrylat-Systems erhältlich ist,
welches enthält:
| | | | |
|---|---|---|---|
| A) | a) | (Meth)acrylat | 30 - 100 Gew.-% |
| | | a1) Methyl (meth) acrylat | 0 - 99,8 Gew.-% |
| | | a2) C₂-C₄ (Meth)acrylat | 0 - 99,8 Gew.-% |
| | | a3) ≥ C₅ (Meth)acrylat | 0 - 50 Gew.-% |
| | | a4) mehrwertige (Meth)acrylate | 0 - 50 Gew.-% |
| | | a5) Urethan(meth)acrylate | 0,2 - 50 Gew.-% |
| | b) | Comonomere | 0 - 70 Gew.-% |
| | | b1) Vinylaromaten | 0 - 35 Gew.-% |
| | | b2) Vinylester | 0 - 35 Gew.-%, |
| | | wobei die Komponenten a1) bis b2) so gwählt sind, daß sie zusammen 100 Gewichtsprozent ergeben, | |
| B) | | auf 1 Gew.-Teil A) 0,05 - 5 Gew.-Teile eines in A) löslichen oder quellbaren (Pre)polymers | |
| C) | | ein bis zur Polymerisation von den zu polymerisierenden Bestandteilen des Systems ganz oder teilweise getrennt zu haltendes Redoxsystem enthaltend einen Beschleuniger und einen peroxydischen Katalysator oder Initiator in einer Menge ausreichend zur Kalthärtung der Komponente A) | |
| D) | | übliche Additive | |
| E) | | Füllstoffe bezogen auf die Summe A) - E) | 0 - 75 Gew.-%. |

2. Sanitärartikel nach Anspruch 1,
**dadurch gekennzeichnet,**
daß das zur Bildung der verstärkenden Schicht des Sanitärartikels eingesetzte (Meth)acrylatsystem A) bis E) einen flexibilisierend wirkenden Gehalt an wenigstens einem Urethan(meth)acrylat a5) enthält, welches wenigstens drei reaktive, endständige, ethylenisch ungesättigte Funktionalitäten aufweist.

3. Sanitärartikel nach Anspruch 1 oder 2,
**dadurch gekennzeichnet,**
daß der Gehalt an Komponente a5) im Bereich von 3 bis 25 Gewichtsprozent, vorzugsweise 5 bis 20 Gewichtsprozent liegt, bezogen auf die Summe der Komponenten a) und b) zu 100 Gewichtsprozent.

4. Sanitärartikel nach Anspruch 2 oder 3,
**dadurch gekennzeichnet,**
daß das eingesetzte Urethan(meth)acrylat a5) erhältlich ist durch die Umsetzung von
entweder I)
i) Hydroxyalkyl(meth)acrylsäureestern mit
ii) Polyisocyanaten und
iii) Polyoxyalkylenen, die mindestens drei Hydroxyfunktionalitäten aufweisen, wobei der Anteil an Polyethylenoxid kleiner als 50 Gew.-%, bezogen auf die Gesamtmenge an Polyoxyalkylen, ist,
oder II)
i') Hydroxyalkyl (meth) acrylsäureestern mit
ii') Mischungen aus Polyisocyanaten, von denen mindestens ein Polyisocyanat 3 oder mehr Isocyanatgruppen aufweist, und
iii') Polyoxyalkylenen, die mindestens zwei Hydroxyfunktionalitäten aufweisen, wobei der Anteil an Polyethylenoxid kleiner als 50 Gew.-%, bezogen auf die Gesamtmenge an Polyoxyalkylen, ist.

5. Sanitärartikel nach Anspruch 4,
dadurch gekennzeichnet, daß die Urethan(meth)acrylate a5) durch die Umsetzung von Hydroxyethylmethacrylat, Hydroxyethylacrylat, Hydroxypropylmethacrylat, Hydroxypropylacrylat und/oder Mischungen von zwei oder mehreren der vorstehenden Verbindungen als Hydroxyalkyl(meth)acrylsäureester erhältlich sind.

6. Sanitärartikel nach Anspruch 4 oder 5,
dadurch gekennzeichnet, daß die Urethan(meth)acrylate a5) durch Umsetzung von 2,4-Toluendiisocyanat, 2,6-Toluendiisocyanat, 4,4'-Diphenylmethandiisocyanat (MDI), 4,4'-Dicyclohexyldiisocyanat, meta- und para-Tetramethylxylendiisocyanat, 3-Isocyanatomethyl-3,5,5-trimethylcyclohexylisocyanat (Isophorondiisocyanat), Hexamethylendiisocyanat, 1,5-Naphthylendiisocyanat, Dianisidindiisocyanat, Di(2-isocyanatoethyl)-bicyclo[2.2.1]-hept-5-en-2,3-dicarboxylat, 2,2,4- und 2,4,4-Trimethylenhexamethylen-diisocyanat, Triphenylmethan-4,4*'*,4*''*-triisocyanat, Tris-(4-isocyanatophenyl)-thiophosphat und Mischungen davon als Polyisocyanat erhältlich sind.

7. Sanitärartikel nach einem oder mehreren der vorhergehenden Ansprüche 4 bis 6,
dadurch gekennzeichnet, daß die Urethan(meth)acrylate durch die Umsetzung von Polyoxypropylen und/oder Polytetramethylenoxiden, die jeweils mindestens drei reaktive, endständige Hydroxyfunktionalitäten aufweisen, als Polyoxyalkylen erhältlich sind.

8. Sanitärartikel nach einem oder mehreren der vorhergehenden Ansprüche 4 bis 7, dadurch gekennzeichnet, daß die Urethan(meth)acrylate drei oder vier reaktive endständige ethylenisch ungesättigte Funktionalitäten aufweisen.

9. Sanitärartikel nach einem oder mehreren der vorhergehenden Ansprüche 4 bis 8, dadurch gekennzeichnet, daß die Urethan(meth)acrylate durch Umsetzung von Polyoxyalkylenen erhältlich sind, welche ein Gewichtsmittel des Molekulargewichts im Bereich von 2 000 bis 20 000 aufweisen.

10. Sanitärartikel nach einem der vorhergehenden Ansprüche,
**dadurch gekennzeichnet,**
daß die Füllstoffe E) unter den Bedingungen der Polymerisation von Acrylglas inerte Feinstfüllstoffe mit einer Feinheit ≤ 100 µm umfaßen.

11. Sanitärartikel nach Anspruch 10,
**dadurch gekennzeichnet,**
daß die Füllstoffe E) Glimmer, Aluminiumhydroxid, Calciumcarbonat, Kreide, Marmor, Quarzit, Wollastonit und/oder Cristobalit sind.

12. Sanitärartikel nach Anspruch 10,
**dadurch gekennzeichnet,**
daß der Füllstoff E) im (Meth)acrylat-System Glimmer ist.

13. Sanitärartikel nach einem der vorhergehenden Ansprüche,
**dadurch gekennzeichnet,**
daß die Füllstoffe E) mit inertem Gas gefüllte hohle Mikropartikel umfaßen.

14. Sanitärartikel nach Anspruch 12
**dadurch gekennzeichnet,**
daß die Mikropartikel gasgefüllte, expandierte Mikrohohlkugeln aus Kunststoff sind.

15. Sanitärartikel nach Anspruch 13
**dadurch gekennzeichnet,**
daß die Mikrohohlkugeln mit Calciumcarbonat beschichtet sind.

16. Sanitärartikel nach einem oder mehreren der vorhergehenden Ansprüche,
**dadurch gekennzeichnet,**
daß die Füllstoffe E) im (Meth)acrylat-System in einer Menge von 40 - 65 Gew.-%, bevorzugt 50 - 60 Gew.-%, bezogen auf die Summe A) - E), enthalten sind.

17. Sanitärartikel nach einem oder mehreren der vorhergehenden Ansprüche,
**dadurch gekennzeichnet,**
daß das (Meth)acrylat-System die Komponenten B) : A) in einem Gewichtsverhältnis im Bereich von 0,1 : 1 bis 2 : 1 aufweist.

18. Sanitärartikel nach Anspruch 17,
**dadurch gekennzeichnet,**
daß das Gewichtsverhältnis von B) : A) im Bereich von 0,2 : 1 bis 1 : 1 ist.

19. Sanitärartikel nach einem der vorhergehenden Ansprüche,
**dadurch gekennzeichnet,**
daß B) eine durch Suspensionspolymerisation erhältliche PMMA-Lackperle, ein Emulsionspolymerisat und/oder Mahlgut aus einem Recyclingprozess mit einem mittleren Teilchendurchmesser bis 0,8 mm ist.

20. Sanitärartikel nach einem der vorhergehenden Ansprüche,
**dadurch gekennzeichnet,**
daß das Verstärkungsmaterial aus einer ersten und einer zweiten Schicht besteht, wobei jede der Schichten durch Aushärtung eines auf die Rückseite des Acrylglasformteils aufgebrachten, vorzugsweise aufgesprühten, polymerisierbaren, kalthärtenden, reaktiven (Meth)acrylat-Systems gemäß den vorhergehenden Ansprüchen erhältlich ist und sich die zur Erzeugung der jeweiligen Schicht eingesetzten (Meth)acrylatsysteme zumindest hinsichtlich einer Komponente voneinander unterscheiden.

21. Sanitärartikel nach Anspruch 20,
**dadurch gekennzeichnet,**
daß das (Pre)polymer B) der ersten Verstärkungsschicht einen Comonomergehalt zwischen 30 und 80 Gew.-%, das der zweiten Verstärkungsschicht zwischen 0 und < 30 Gew.-% aufweist.

22. Sanitärartikel nach Anspruch 21,
**dadurch gekennzeichnet,**
daß das Comonomer Methylacrylat, Ethylacrylat, Butylacrylat, 2-Ethylhexylacrylat, Ethylmethacrylat, n-Butylmethacrylat, i-Butylmethacrylat, 2-Ethylhexylmethacrylat, Propylacrylat, Propylmethacrylat, Methacrylsäure, Ethyltriglykolmethacrylat und/oder Hydroxypropylmethacrylat ist.

23. Sanitärartikel nach einem oder mehreren der vorhergehenden Ansprüche 20 bis 22,
**dadurch gekennzeichnet,**
daß bei Vorliegen von zwei Verstärkungsschichten die erste Schicht eine Dicke von 0,5 - 2,5 mm und die zweite Schicht eine Dicke im Bereich von 2,5 - <5,5 mm aufweisen.

24. Verfahren zur Herstellung eines Sanitärartikels gemäß den vorhergehenden Ansprüchen, dadurch gekenzeichnet, daß man wenigstens ein reaktives Harzsystem auf die Rückseite eines Formteils aus Acrylglas aufsprüht, wobei das Harzsystem im Kontakt mit dem Acrylglasformteil aushärtet und sich dabei mit dem Acrylglasformteil dauerhaft ohne zusätzlichen Haftvermittler verbindet.

25. Verfahren nach Anspruch 24,
**dadurch gekennzeichnet,**
daß zwei voneinander verschiedene überwiegend auf (Meth)acrylaten basierende Harzsysteme verwendet werden, wobei auf das Acrylglasformteil zunächst ein erstes Harzsystem aufgesprüht wird, welches die erforderliche Schlagzähigkeit vermittelt, und nach dessen Aushärtung darauf ein zweites Harzsystem aufgesprüht wird, das die notwendige Steifigkeit verleiht.

26. Verfahren nach Anspruch 24 oder 25,
**dadurch gekennzeichnet,**
daß die Füllstoffe E) vor Verwendung der reaktiven Harzsysteme mit einem Homogenisierungsaggregat unter Zusatz eines Thixotropiermittels in einer Menge von 0,01 - 0,5 Teile bezogen auf 1 Teil E) in das erste und/oder zweite System aus jeweiligem Bindemittel A) - D) eingearbeitet werden.
